# EUROPEAN PATENT APPLICATION

(11) **EP 4 564 503 A1**
(43) Date of publication of application: **04.06.2025**
(21) Application number: 24196578.9
(22) Date of filing: 27.08.2024
(51) Int. Cl.: H01M 10/052, H01M 10/0565, H01M 10/0567, H01M 10/0568, H01M 10/0569

(54) **GEL POLYMER ELECTROLYTE FOR LITHIUM BATTERY AND LITHIUM BATTERY INCLUDING THE SAME**

(30) Priority: 01.12.2023 KR 20230172614; 17.05.2024 KR 20240064797
(71) Applicant: SAMSUNG SDI CO., LTD., Giheung-gu Yongin-si, Gyeonggi-do 17084 (KR)
(72) Inventor: Bae, Woojin, 17084 Yongin-si, Gyeonggi-do (KR); Kim, Soojin, 17084 Yongin-si, Gyeonggi-do (KR); Kim, Seulwoo, 17084 Yongin-si, Gyeonggi-do (KR); Moon, Jongseok, 17084 Yongin-si, Gyeonggi-do (KR); Park, Jongseok, 17084 Yongin-si, Gyeonggi-do (KR)
(74) Representative: Michalski Hüttermann & Partner Patentanwälte mbB

(57) **Abstract**

A gel polymer electrolyte for a lithium battery and a lithium battery including the gel polymer electrolyte are disclosed. The gel polymer electrolyte includes a gel polymer and a liquid electrolyte, the gel polymer may be i) a crosslinked product of a polyfunctional acryl-based monomer having 3 or more polymerizable functional groups, or ii) a crosslinked product of a first polymerizable monomer and a second polymerizable monomer, the first polymerizable monomer being a polyfunctional acryl-based monomer having 3 or more polymerizable functional groups, and the second polymerizable monomer being one or more selected from among a urethane acryl-based monomer having two or more polymerizable functional groups and a polymerizable monomer having two or more polymerizable functional groups and containing a perfluoropolyether unit, wherein the liquid electrolyte includes a lithium salt, an organic solvent, and butyronitrile, and the lithium salt may include lithium difluoro(oxalato)borate and lithium tetrafluoroborate.

## Description

### CROSS-REFERENCES TO RELATED APPLICATION

The present application claims priority to and the benefit of Korean Patent Application Nos. 10-2023-0172614, filed on December 01, 2023, and 10-2024-0064797 filed on May 17, 2024 in the Korean Intellectual Property Office, the entire content of which is incorporated herein by reference in its entirety.

### BACKGROUND

### 1. Field

One or more embodiments of the present disclosure relate to a gel polymer electrolyte for a lithium battery and a lithium battery including the gel polymer electrolyte.

### 2. Description of the Related Art

Lithium batteries predominantly use carbon-based anode active materials such as graphite. Such carbon-based anode active materials do not undergo volume changes during charging/discharging, and therefore can provide lithium batteries with relatively high stability; however, their relatively low capacity leads to a growing need and desire for anode active materials with higher capacity than that of such carbon-based anode active materials.

As an anode active material, lithium metal which has a much higher theoretical electrical capacity than that of carbon-based anode active materials, may be used.

Lithium metal give rise to the formation of lithium dendrites on the lithium metal surface due to side reactions with an electrolyte during charging/discharging, and because the growth of such dendrites may cause short-circuits between a cathode and an anode of a lithium battery, the lithium battery including lithium metal may have decreased lifespan characteristics.

To control such lithium dendrites, methods of using solid electrolytes with high modulus and high lithium-ion mobility have been proposed.

Among such solid electrolytes, polymer solid electrolytes, due to their low ionic conductivity at room temperature, are limited in practical applications. However, among such solid electrolytes, gel polymer electrolytes may be easy to manufacture and have good or suitable electrochemical performance, but they exhibit a poor lithium-ion transfer rate; therefore, the improvement in lithium-ion transfer rate is desired or needed.

### SUMMARY

One or more aspects of embodiments of the present disclosure are directed toward a gel polymer electrolyte for a lithium battery, which has improved lithium-ion conductivity.

One or more aspects of embodiments of the present disclosure are directed toward a lithium battery, which has improved cycling performance by including the gel polymer electrolyte.

Additional aspects will be set forth in part in the description which follows and, in part, will be apparent from the description, or may be learned by practice of the presented embodiments of the present disclosure.

According to one or more embodiments of the present disclosure, a gel polymer electrolyte for a lithium battery includes a gel polymer and a liquid electrolyte,
wherein the gel polymer is:
   i) a crosslinked product of a polyfunctional acryl-based monomer having 3 or more polymerizable functional groups; or
   ii) a crosslinked product of a first polymerizable monomer and a second polymerizable monomer, where the first polymerizable monomer is a polyfunctional acryl-based monomer having 3 or more polymerizable functional groups, and the second polymerizable monomer is one or more selected from among a urethane acryl-based monomer having two or more polymerizable functional groups, a polymerizable monomer having two or more polymerizable functional groups and containing a perfluoropolyether (PFPE) unit, and/or a (e.g., any suitable) combination thereof,
wherein the liquid electrolyte includes a lithium salt, an organic solvent, and butyronitrile,
wherein the lithium salt includes a first lithium salt and a second lithium salt, wherein the first lithium salt and the second lithium salt each independently includes a fluorine-containing borate-based lithium salt.

According to one or more embodiments of the present disclosure, a lithium battery includes an anode current collector, a cathode, and an electrolyte layer arranged between the cathode and the anode current collector, wherein the electrolyte layer includes the gel polymer electrolyte.

According to one or more embodiments of the present disclosure, the lithium battery may further include a lithium metal layer between the anode current collector and the electrolyte layer, wherein the lithium metal layer may include lithium metal foil, lithium metal powder, lithium alloy foil, lithium alloy powder, and/or a (e.g., any suitable) combination thereof.

According to one or more embodiments of the present disclosure, the electrolyte layer may include a separator, and the separator may include a porous substrate. According to one or more embodiments of the present disclosure, the porous substrate may be a porous film, the porous film may be a woven fabric or a nonwoven fabric, and
the porous substrate may include an olefin-based resin, a fluorine-based resin, an ester-based resin, an imide-based resin, an acryl-based resin, a cellulose-based resin, and/or a (e.g., any suitable) combination thereof.

According to one or more embodiments of the present disclosure, the olefin-based resin may include polyethylene, polypropylene, and/or a (e.g., any suitable) combination thereof; the fluorine-based resin may include polyvinylidene fluoride, polytetrafluoroethylene, and/or a (e.g., any suitable) combination thereof; the ester-based resin may include polyethylene terephthalate, polybutylene terephthalate, and/or a (e.g., any suitable) combination thereof; the imide-based resin may include polyamide-imide, polyetherimide, and/or a (e.g., any suitable) combination thereof;
the acryl-based resin may include polyacrylonitrile, polyacrylate, and/or a (e.g., any suitable) combination thereof; and the cellulose-based resin may include carboxymethyl cellulose, bacterial cellulose, plant-derived cellulose, animal-derived cellulose, and/or a (e.g., any suitable) combination thereof.

According to one or more embodiments of the present disclosure, the anode current collector may include copper (Cu), nickel (Ni), nickel-coated copper, stainless steel (SUS), iron (Fe), cobalt (Co), or an alloy thereof. According to one or more embodiments of the present disclosure, the lithium battery may include an anode active material layer, a protective layer, and/or a (e.g., any suitable) combination thereof, between the anode current collector and the electrolyte layer.

### BRIEF DESCRIPTION OF DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1A shows a result of scanning electron microscopy analysis of a gel polymer electrolyte prepared according to Example 1;
FIG. 1B shows a result of scanning electron microscopy analysis of a gel polymer electrolyte prepared according to Comparative Example 1;
FIG. 2 is a diagram for describing a stacked structure of a lithium battery according to one or more embodiments of the present disclosure;
FIG. 3 is a diagram for describing a stacked structure of a lithium battery according to one or more embodiments of the present disclosure;
FIG. 4 is a schematic diagram of a lithium battery according to one or more embodiments of the present disclosure;
FIG. 5 is a schematic diagram of a lithium battery according to one or more embodiments of the present disclosure; and
FIG. 6 is a schematic view of a lithium battery according to one or more embodiments of the present disclosure.

### DETAILED DESCRIPTION

Reference will now be made in more detail to one or more embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, one or more embodiments are merely described in more detail, by referring to the drawings, to explain aspects of the present disclosure. As used herein, the term "and/or" or "or" may include any and all combinations of one or more of the associated listed items. Expressions such as "at least one of," "one of," and "selected from," if (e.g., when) preceding a list of elements, modify the entire list of elements and do not modify the individual elements of the list. For example, "at least one of a, b or c", "at least one selected from among a, b, and c", "at least one selected from among a to c", etc., may indicates only a, only b, only c, both (e.g., simultaneously) a and b, both (e.g., simultaneously) a and c, both (e.g., simultaneously) b and c, all of a, b, and c, or variations thereof.

The present disclosure, which will be more fully described hereinafter, may have one or more suitable variations and one or more suitable embodiments, and specific embodiments will be illustrated in the accompanied drawings and described in greater detail. However, the present disclosure should not be construed as being limited to specific embodiments set forth herein. Rather, these embodiments are to be understood as encompassing all variations, equivalents, or alternatives included in the scope of the present disclosure.

The terminology used hereinbelow is used for the purpose of describing particular embodiments only, and is not intended to limit the present disclosure. As used herein, the singular forms "a," "an," "one," and "the" are intended to include the plural forms as well, unless the context clearly indicates otherwise.. As used herein, the terms "comprise(s)" and/or "comprising," or "include(s)" and/or "including", or "have(has)" and/or "having" specify the presence of stated features, regions, integers, steps, operations, elements, components, ingredients, materials, and/or a (e.g., any suitable) combination thereof, but do not preclude the presence or addition of one or more other features, regions, integers, steps, operations, elements, components, ingredients, materials, and/or a (e.g., any suitable) combination thereof. As used herein, "/" may be interpreted as "and", or as "or" depending on the context. Further, the use of "may" when describing embodiments of the present disclosure refers to "one or more embodiments of the present disclosure".

In the drawings, the thicknesses of layers and regions may be exaggerated for clarity of description. Like reference numerals denote like elements throughout the present disclosure, and duplicative descriptions thereof may not be provided for conciseness. Throughout the disclosure, if (e.g., when) a component, such as a layer, a film, a region, or a plate, is described as being "above" or "on" another component, the component may be directly above the another component, or there may be yet another component (e.g., an intervening component) therebetween. In contrast, when a component is referred to as being "directly on" another component, there is no intervening component therebetween. It will be understood that although the terms "first," "second," and/or the like. May be used herein to describe one or more suitable elements, these elements should not be limited by these terms. These terms are only used to distinguish one element from another element. In the present disclosure and the drawings, elements that serve substantially the same function are labeled with the same reference numeral and may not be discussed redundantly.

Unless explicitly stated otherwise in the present disclosure, if (e.g., when) an element, such as a layer, a film, an area, and a plate, is referred to as being "on" or "over" another element, it can be directly on the other element or intervening elements may also be present.

Unless explicitly stated otherwise in the present disclosure, any terms expressed in the singular form may also include the plural form. Further, unless explicitly stated otherwise, "including A or B" or "including A and/or B" may refer to "including A, including B, or including A and B".

The term "a combination thereof" as used herein may refer to a mixture, a laminate, a composite, a copolymer, an alloy, a reaction product, and/or the like, of referents.

Unless otherwise defined herein, a particle diameter may be an average particle diameter. In addition, the particle diameter may refer to an average particle diameter (D50) referring to a diameter of particles at cumulative 50 vol% in a particle size distribution. The average particle size (D50) may be measured by methods widely suitable to those skilled in the art. For example, the average particle size (D50) may be measured by a particle size analyzer, or may be measured by using a transmission electron microscopy image, or a scanning electron microscopy image. In one or more embodiments, such measurements may be taken by a measurement device using a dynamic light-scattering technique, and the number of particles within a given particle size range may be counted through data analyses, and an average particle diameter (D50) value may be calculated therefrom. In one or more embodiments, the average particle diameter (D50) may be measured using a laser diffraction method. If the laser diffraction method is to be used for the measurement, for example, the particles to be measured may be dispersed in a dispersion medium and subjected to ultrasonic radiation at about 28 kHz and a power output of 60 Watts, and based on 50 % cumulative volume in a particle size distribution according to the measurement device, the average particle diameter (D50) may be calculated.

The term "particle diameter" or "particle size" of particles, as used herein, refers to an average diameter if the particles are spherical, and refers to an average major axis length if the particles are non-spherical. The particle diameter of particles may be measured using a particle size analyzer (PSA). The term "particle diameter" or "particle size" of particles, as used herein, may refer to, for example, an average particle diameter. Average particle diameter may be, for example, a median particle diameter (D50). The median particle diameter D50 may be a particle diameter corresponding to a 50% cumulative volume calculated from the smallest particle to the largest particle in a particle size distribution measured, for example, by a laser diffraction method. The average particle diameter and/or average major axis length of particles may be measured by using a scanning electron microscope (SEM). If measured by using an SEM, an average value of more than 30 randomly selected particles having a diameter of 1 micron (µm) or more, excluding fine particles, may be used.

The term "metal" as used herein refers to both (e.g., simultaneously) metals and metalloids such as silicon and germanium, in an elemental or ionic state, and the term "alloy" as used herein refers to a mixture of two or more metals.

As used herein, the term "cathode active material" refers to a cathode material capable of undergoing lithiation and delithiation, and the term "anode active material" refers to an anode material capable of undergoing lithiation and delithiation.

As used herein, the terms "lithiation" and "to lithiate" refer to a process of adding lithium to a cathode active material or an anode active material, and the terms "delithiation" and "to delithiate" refer to a process of removing lithium from a cathode active material or an anode active material.

As used herein, the terms "charging" and "to charge" refer to a process of providing electrochemical energy to a battery, and the terms "discharging" and "to discharge" refer to a process of removing electrochemical energy from a battery.

As used herein, the terms "positive electrode" and "cathode" refer to an electrode at which electrochemical reduction and lithiation take place during a discharging process, and the terms "negative electrode" and "anode" refer to an electrode at which electrochemical oxidation and delithiation take place during a discharging process.

The term "length" and "thickness" as utilized herein refers to, for example, an average length, an average thickness, and an average width respectively. The "length" and "thickness" measured utilizing software from a scanning electron microscope image.

Hereinbelow, a gel polymer electrolyte for a lithium battery, and a lithium battery including the gel polymer electrolyte according to one or more embodiments will be described in greater detail.

Gel polymer electrolytes in lithium batteries, despite being convenient to manufacture and having excellent or suitable electrochemical properties, may be in need of an improvement for their insufficient ion (e.g., ionic) conduction speed (e.g., insufficient ion mobility) for lithium ions.

To address some of the aforementioned issues, in one or more embodiments of the present disclosure, a gel polymer electrolyte for a lithium battery is provided, which has improved lithium-ion mobility by transferring lithium cations and anions to a polymer chain, thereby concentrating the distribution of lithium ions on a gel polymer chain present in the gel polymer electrolyte.

The gel polymer electrolyte for a lithium battery according to one or more embodiments may include a gel polymer and a liquid electrolyte, wherein the gel polymer may be: i) a crosslinked product of a polyfunctional acryl-based monomer having 3 or more polymerizable functional groups; or ii) a crosslinked product of a first polymerizable monomer and a second polymerizable monomer, wherein the first polymerizable monomer may be a polyfunctional acryl-based monomer having 3 or more polymerizable functional groups, and the second polymerizable monomer may be one or more selected from among a urethane acryl-based monomer having two or more polymerizable functional groups, a polymerizable monomer having two or more polymerizable functional groups and containing a perfluoropolyether (PFPE) unit, and/or a (e.g., any suitable) combination thereof, wherein the liquid electrolyte may include a lithium salt, an organic solvent, and butyronitrile, and the lithium salt may include a first lithium salt and a second lithium salt, wherein the first lithium salt and the second lithium salt may each independently include a fluorine-containing borate-based lithium salt.

In the present disclosure, the terms "first polymerizable monomer" and "second polymerizable monomer" may also be referred to as "first crosslinkable monomer" and "second crosslinkable monomer", respectively.

In the present disclosure, the term "polymerizable functional group refers to a functional group containing a carbon-carbon unsaturated bond, such as a carbon-carbon double bond, for example, and the functional group containing the carbon-carbon unsaturated bond may include, for example, an acrylate group, a methacrylate group, an allyl group, or a combination thereof.

In the gel polymer electrolyte according to one or more embodiments, butyronitrile may act as a medium that helps anions to migrate to the anode along with lithium cations. Butyronitrile is a neutral molecule that has improved anion interactions as well as improved lithium cation interactions, and by using a gel polymer electrolyte formed using a liquid electrolyte containing such butyronitrile, a lithium battery with improved lifespan characteristics and reduced resistance may be provided.

A content (e.g., amount) of butyronitrile may be about 3 wt% to about 45 wt%, about 5 wt% to about 40 wt%, or about 10 wt% to about 35 wt%, with respect to 100 wt% of the total weight of the liquid electrolyte. If the content (e.g., amount) of butyronitrile is within the aforementioned ranges, interactions with lithium cations and anions may be excellent or suitable so that the gel polymer electrolyte having improved lithium-ion conductivity may be formed.

In a lithium battery according to one or more embodiments, if butyronitrile with excellent or suitable affinity for both (e.g., simultaneously) cations and anions is used on the anode surface, cations and anions (for example, difluoroxalate borate anion or tetrafluoroborate anion) may bind to the butyronitrile, such that as Li cations migrate from the cathode to anode, the number of anions on the anode surface increases, such that if (e.g., when) lithium cations are plated, a film containing anions may be formed on its surface. The general electrolytes have the structure of lithium metal surface/cations/solvent, in which the solvent decomposes to form a solid electrolyte interphase (SEI), and the formation of organic SEI may cause the performance of a lithium battery to deteriorate.

However, in the lithium battery according to one or more embodiments of the present disclosure, by using butyronitrile, the SEI with an increased concentration of inorganic material (anions) on the lithium metal surface may be formed. As a result, the performance of the lithium battery may improve.

If butyronitrile is not added to a gel polymer electrolyte according to one or more embodiments, electrons may be supplied to lithium ions on the anode current collectors, leading to the formation of a lithium plated layer. Solvent components present around the lithium ions may decompose, leading to the formation of a solid electrolyte interphase (SEI) layer containing organic materials on the lithium metal surface. However, if the SEI layer contains organic materials, the lifespan characteristics of a lithium battery may deteriorate.

The use of butyronitrile may induce anions to migrate together if (e.g., when) lithium ions migrate from the cathode to the anode during initial charging. As a result, it may induce more anions to be present at the anode, which, consequently, allows clustered solvation structures to be present in abundance, such that a robust film that is rich in anions, e.g., boron and fluorine ions, may be formed.

If the amount of butyronitrile is within the aforementioned ranges, the ions may not undergo complete dissociation, and the number of clusters in which three or more ions are present may increase. Such clusters, even though they are made of the same material, may have a different form that allows a film to form faster than other structures. Such butyronitrile due to excellent or suitable cation and anion interactions, may have excellent or suitable affinity for both (e.g., simultaneously) cations and anions. As a result, using such butyronitrile may lead to an increase in the number of anions around lithium, along with cations, such that an SEI layer with an increased amount of inorganic materials on the lithium metal surface may be formed. In one or more embodiments, a thickness of the SEI layer may be 50 nm or less, 30 nm or less, or about 1 nm to about 25 nm. If such an SEI layer with an increased amount of inorganic materials exists on the lithium metal surface, the manufacture of a lithium battery having improved lifespan characteristics may be facilitated.

If the amount of butyronitrile is less than 3 wt% with respect to 100 wt% of the total weight of the liquid electrolyte, the presence of anions around lithium other than solvents may be insignificant. If the amount of butyronitrile is more than 45 wt% with respect to 100 wt% of the total weight of the liquid electrolyte, solvents such as vinylene carbonate (VC), vinyl ethylene carbonate (VEC), and fluoroethylene carbonate (FEC), may fail to be contained in the clusters containing lithium salts and solvents, thus failing to participate in the SEI layer formation. As a result, the SEI layer is formed only of salts and butyronitrile, which may cause the performance of a lithium battery to deteriorate.

An amount of carbonate-based compounds (e.g., carbonate-based compounds included in the liquid electrolyte as a solvent) may be about 30 wt% to about 95 wt%, or about 40 wt% to about 90 wt%, with respect to 100 wt% of the total weight of the butyronitrile and the carbonate-based compound.

If the amount of the carbonate-based compound is within the aforementioned ranges, lithium mobility may improve, and the manufacture of a lithium battery having improved initial capacity and lifespan characteristics may facilitated. If the amount of the carbonate-based compound is more than 95 wt%, the proportion of clusters having an appropriate or suitable size may decrease, causing a change in the SEI layer composition.

The carbonate-based compound contained in the liquid electrolyte according to one or more embodiments may include fluoroethylene carbonate (FEC) and diethyl carbonate (DEC), and a mixing weight ratio of FEC to DEC may be about 1:10 to about 1:1, about 1:8 to about 1:1, about 1:5 to about 1:1, or about 1:3 to about 1:1.

According to one or more embodiments, the gel polymer electrolyte may be formed as a semi-solid phase by confining a liquid in a polymer matrix obtained through polymerization. In one or more embodiments, if the gel polymer electrolyte is prepared using a monomer with high affinity for lithium ions and a monomer with high affinity for anions as polymerizable monomers (cross-linkable monomers) to form the polymer matrix, the migration of lithium ions may be further facilitated through the polymer chains. As such, through these polymer chains, lithium ions may be evenly plated on the anode current collector, and without an increase in plating of dendritic lithium, lithium may be transferred on the anode current collector at a substantially uniform concentration and evenly plated.

Because the polyfunctional acryl-based monomer having 3 or more polymerizable functional groups, the first polymerizable monomer, and the second polymerizable monomer have a strong affinity for lithium cations and anions, a gel polymer electrolyte obtained therefrom may facilitate the movement of lithium ions through the polymer chain. Therefore, with this gel polymer electrolyte, the manufacture of a lithium battery with improved lifespan characteristics may be facilitated. Here, the lithium cations and anions are derived from a lithium salt, and for example, if LiPF₆ is used as the lithium salt, the anions may be, for example, PF₆⁻.

The gel polymer electrolyte according to one or more embodiments may be prepared using a gel polymer electrolyte-forming composition. The gel polymer electrolyte-forming composition may contain a polymerizable monomer for forming a gel polymer, a liquid electrolyte, and an initiator.

If the gel polymer electrolyte is formed using the polymerizable monomer and the liquid electrolyte containing butyronitrile according to one or more embodiments, butyronitrile may be present around gel polymers formed from the polymerizable monomer, and due to the presence of butyronitrile, an SEI layer with an increased amount of inorganic materials on the lithium metal surface may be formed. If the gel polymer and a carbonate-based compound such as FEC are used, more lithium ions migrate toward and be present around the gel polymer, and as a result, lithium-ion mobility may increase.

Because the polyfunctional acryl-based monomer having 3 or more polymerizable functional groups and the polyfunctional acryl-based monomer containing a urethane group have strong interactions with lithium cations (Li⁺) and anions, the lithium cations may be transferred along the polymer chains and as a result, Li⁺ transference number and lithium-ion mobility may significantly increase. Here, the lithium cations and the anions may be, for example, cations and anions of a lithium salt, for example, if LiPF₆ is used as the lithium salt, the anions may be, for example, PF₆⁻.

The gel polymer electrolyte for a lithium battery according to one or more embodiments may include a gel polymer and a liquid electrolyte, wherein the gel polymer may be: i) a crosslinked product of a polyfunctional acryl-based monomer having 3 or more polymerizable functional groups; or ii) a crosslinked product of a first polymerizable monomer and a second polymerizable monomer, wherein the first polymerizable monomer may be a polyfunctional acryl-based monomer having 3 or more polymerizable functional groups, and the second polymerizable monomer may be one or more selected from among a urethane acryl-based monomer having two or more polymerizable functional groups, a polymerizable monomer having two or more polymerizable functional groups and containing a perfluoropolyether (PFPE) unit, and/or a (e.g., any suitable) combination thereof. The liquid electrolyte may include a lithium salt, an organic solvent, and butyronitrile, wherein the lithium salt may include lithium difluoro(oxalato)borate (LiDFOB) and lithium tetrafluoroborate (LiBF₄).

The polyfunctional acryl-based first polymerizable monomer having 3 or more polymerizable functional groups may have, for example, 3 or more polymerizable functional groups, for example, 3 to 6 polymerizable functional groups. If the number of polymerizable functional groups of the polyfunctional acryl-based first polymerizable monomer is 3 or more, the gel polymer electrolyte having excellent or suitable properties may be obtained. Such polymerizable monomers having 3 or more polymerizable functional groups may be, for example, trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate (DPHA), and/or a (e.g., any suitable) combination thereof.

The ester (COO)- groups in the first polymerizable monomer may serve to capture Li salts and anions. This effect may be used to facilitate and induce anions to migrate together if (e.g., when) lithium ions migrate from the cathode to the anode during initial charging. This leads to inducing more anions to be present at the anode, and consequently, may give rise to the presence of clustered solvation structures to be present in abundance and thereby allow the formation of a robust film. If a fluorine-containing borate-based lithium is used as the lithium salt, the film thus formed may be a robust film rich in anions, e.g., boron and fluorine ions.

The urethane acryl-based monomer having two or more functional groups may be a compound represented by Formula 1, a compound represented by Formula 2, or a (e.g., any suitable) combination thereof.

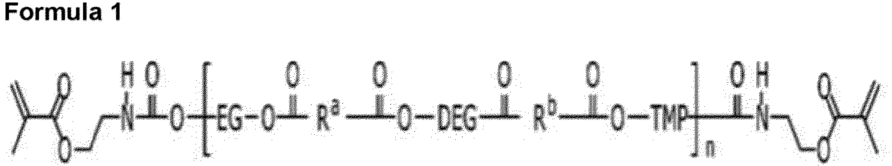

In Formula 1, n may be an integer of 1 to 100, R^{a} and R^{b} may be the same as or different from each other, and may each independently be a substituted or unsubstituted C1-C10 alkylene group, EG may denote an ethylene glycol residue , DEG may denote a diethylene glycol residue, and TMP may denote a trimethylolpropane residue.

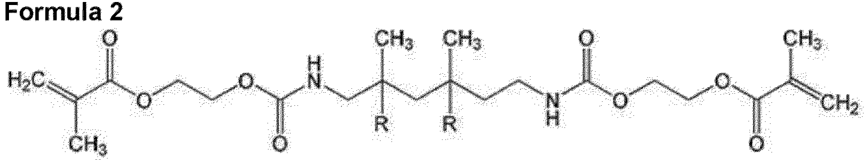

Each R in Formula 2 may be independently hydrogen or a C1-C3 alkyl group.

In Formula 1, n may be an integer from 3 to 80, an integer from 5 to 50, or an integer from 5 to 30. For example, the substituted alkylene may be alkylene, at least one hydrogen of which is substituted with a C1-C3 alkyl group.

The compound of Formula 1 or the compound of Formula 2 may be a urethane group-containing polyfunctional acryl-based second polymerizable monomer.

Examples of the compound represented by Formula 1 may include compounds represented by the following Formula 1-1.

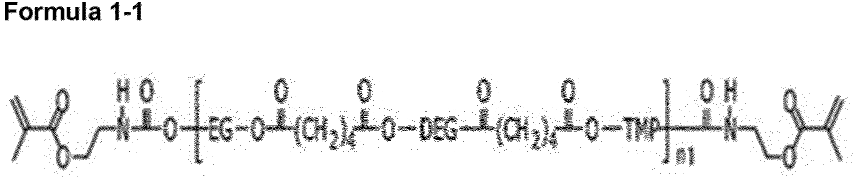

In Formula 1-1, n1 may be an integer from 1 to 100, EG may be an ethylene glycol residue, DEG may be a diethylene glycol residue, and TMP may be a trimethylolpropane residue.

In one or more embodiments, in Formula 1-1, n1 may be an integer from 3 to 80, an integer from 5 to 50, or an integer from 5 to 30.

The compounds of Formula 1 and Formula 1-1 may be prepared using the preparing method disclosed in Korean Registered Patent No. 10-1326629, and Korean Registered Patent No. 10-1326629 is incorporated and cited herein by reference.

The above-described compound of Formula 1 may have an isocyanate group at one end and a method of manufacturing the compound will be described.

A C1-C10 aliphatic dicarboxylic acid, diethylene glycol, ethylene glycol, and trimethylol propane may be mixed, a reaction catalyst may be added thereto, and the mixture may be heat-treated to prepare polyester polyol. In some embodiments, polyester polyol may be obtained by esterification reaction between a C1-C10 aliphatic dicarboxylic acid and alcohols, i.e., diethylene glycol, ethylene glycol, and trimethylol propane. For example, titanium isopropoxide may be used as the reaction catalyst.

As reaction between polyester polyol and isocyanatoethyl methacrylate progresses by adding the isocyanatoethyl methacrylate to the polyester polyol, polyurethane may be formed to prepare the compound of Formula 1 having isocyanate groups at both ends.

The C1-C10 aliphatic dicarboxylic acid may be diadipic acid, succinic acid, sebacic acid, or a combination thereof.

In the reaction between polyester polyol and isocyanatoethyl methacrylate, at least one part of a hydroxyl group of the polyester polyol may react with the isocyanatoethyl methacrylate to form polyurethane. In the reaction between polyester polyol and isocyanatoethyl methacrylate, monomethyl ether hydroquinone as a polymerization inhibitor, butylated hydroxy toluene as an antioxidant, and dibutyl-tin-dilaulate as a catalyst may be added.

A weight ratio of the compound represented by Formula 1 or 1-1 may be in a range of about 10,000 to about 100,000. To have a weight average molecular weight within the range, the range of n and n1 may be used in Formulae 1 and 3, respectively.

If the urethane group-containing multifunctional acrylic monomer having high mechanical strength and elasticity by including an urethane moiety constitutes a copolymer structure with a multifunctional block copolymer, a gel polymer electrolyte having high mechanical strength and elasticity may be manufactured.

Because the urethane acryl-based monomer having two or more functional groups, due to including a urethane moiety, has high mechanical strength and elasticity, if such a monomer is used as the second polymerizable monomer to form a crosslinked product with the first polymerizable monomer, the gel polymer electrolyte having elasticity while maintaining high mechanical strength, may be prepared.

As the second polymerizable monomer, other monomers containing a polyfunctional functional group having a structure similar to the polyfunctional acrylic monomer containing a urethane group may be added. Such other monomers having a polyfunctional functional group with a similar structure may include, for example, urethane acrylate methacrylate, urethane epoxy methacrylate, Satomer N3DE180 and N3DF230 (products names of Arkema Corporation).

If a polyfunctional acryl-based monomer containing a urethane group is used as a polymerizable monomer, the polyfunctional acryl-based monomer containing a urethane group may act as a diluent in the liquid electrolyte and thereby cause the viscosity of the gel polymer electrolyte-forming composition to decrease. In one or more embodiments, the gel polymer electrolyte-forming composition may have a viscosity of about 4 cps to about 10 cps. Therefore, using the gel polymer electrolyte-forming composition having a viscosity in the aforementioned range may facilitate the injection into a battery structure.

The polymerizable monomer having 2 or more (e.g., 3 or more) polymerizable functional groups and containing a PFPE unit, due to containing a perfluoroether unit, may show the effect of increasing the ionic conductivity of the gel polymer electrolyte, and due to improved oxidation stability, may improve high-voltage stability compared to if (e.g., when) using polymerizable monomers not containing PFPE units. For example, the polymerizable monomer having 2 or more polymerizable functional groups and containing a PFPE unit may be a compound represented by Formula 3 or Formula 3-1.

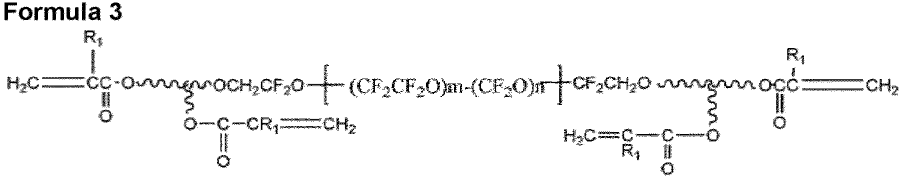

In Formula 3, R₁ may each independently be hydrogen or a C1-C6 alkyl group, m and n may each independently be an integer greater than 0, and the sum of m and n may be in a range of 2 to about 300, or 2 to about 100. For example, in one or more embodiments, m may be an integer in a range of 1 to about 150, or 1 to about 100, and n may be an integer in a range of 1 to about 150, or 1 to about 100.

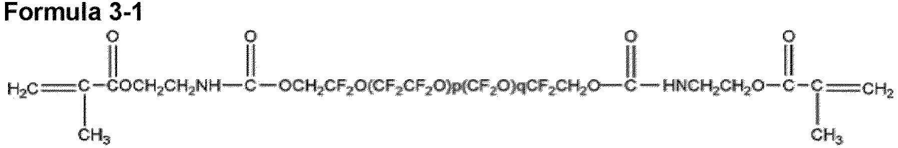

In Formula 3-1, p and q may each independently be an integer greater than 0, the sum of p and q may be in a range of 2 to about 300, or 2 to about 100, p may be an integer in a range of 1 to about 150, or 1 to about 100, and q may be an integer in a range of 1 to about 150, or 1 to about 100.

A weight average molecular weight of the compound represented by Formula 3 or Formula 3-1 may be about 400 to about 10,000, about 400 to about 5,000, or about 500 to about 3,000. A weight average molecular weight of the compound is meaaured by Gel permeation Chromatography (GPC).

In the polymerizable monomer having two or more polymerizable functional groups and containing a PFPE unit, the number of polymerizable functional groups may be 3 or more, or 4 or more. The compound of Formula 3 may have four (meth)acrylic groups as crosslinkable functional groups, and thus while a small amount of the compound of Formula 3 is used, a network that may trap a large amount of liquid may be formed as compared with an embodiment in which a compound with a small number of crosslinkable functional groups (for example, less than 3 crosslinkable functional groups) is used.

In one or more embodiments, the second polymerizable monomer may be a compound represented by Formula 4, a compound represented by Formula 5, or a (e.g., any suitable) combination thereof.

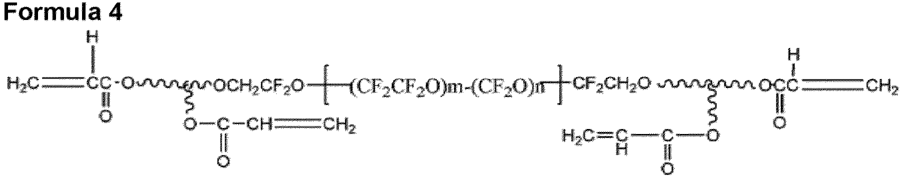

In Formula 4, m and n may each independently be an integer greater than 0, and the sum of m and n may be in a range of 2 to about 300, or 2 to about 100. For example, in one or more embodiments, m may be an integer in a range of 1 to about 150, or 1 to about 100, and n may be an integer in a range of 1 to about 150, or 1 to about 100.

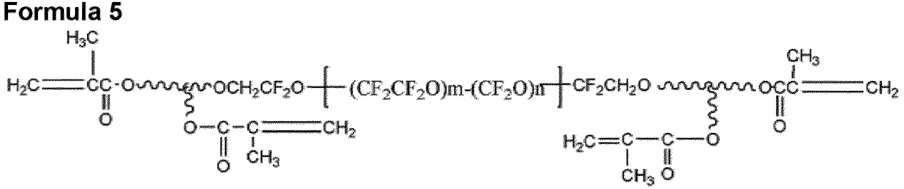

In Formula 5, m and n may each independently be an integer greater than 0, and the sum of m and n may be in a range of 2 to about 300, or 2 to about 100. For example, in some embodiments, m may be an integer in a range of 1 to about 150, or 1 to about 100, and n may be an integer in a range of 1 to about 150, or 1 to about 100.

The polymerizable monomer having 2 or more (e.g., 3 or more) polymerizable functional groups and containing a PFPE unit may be a commercially available product, e.g., Fluorolink^{®} AD 1700 PFPE - perfluoropolyether (PFPE) urethane acrylate (Solvay Specialty Polymers Italy SpA).

A mixing weight ratio of the first polymerizable monomer to the second polymerizable monomer may be in a range of about 1:10 to about 10:1, wherein the first polymerizable monomer may be a polyfunctional acryl-based monomer, and the second polymerizable monomers may be selected from among a urethane acryl-based monomer having two or more polymerizable functional groups, and a polymerizable monomer having 2 or more polymerizable functional groups and containing a PFPE unit. In some embodiments, the weight ratio of the first polymerizable monomer to the second polymerizable monomer may be, for example, about 5:1 to about 1:1 or about 3:1 to about 1:1. If the weight ratio of the first polymerizable monomer to the second polymerizable monomer is within the aforementioned ranges, the gel polymer electrolyte with improved ionic conductivity and physical properties may be formed.

The gel polymer electrolyte made of a crosslinked product obtained from the first polymerizable monomer and the second polymerizable monomer may have extremely strong interactions with cations such as Li⁺ and anions such as PF₆⁻. The strong interaction may be confirmed to be caused by a difference in electron density distribution in a density functional theory (DFT) simulation.

In one or more embodiments, a separator containing the gel polymer electrolyte may be prepared separately to form a free-standing film, the separator containing the gel polymer electrolyte may be arranged on an anode current collector and a protective layer, and a cathode may be then arranged thereon to produce a lithium battery.

In one or more embodiments, once an anode current collector and a protective layer are positioned, a separator and a cathode may be arranged thereon to form a battery structure. Then, the battery structure may be injected with the gel polymer electrolyte-forming composition of the present disclosure and subjected to a heat treatment, to prepare a lithium battery having a separator containing the gel polymer electrolyte.

A lithium battery according to one or more embodiments may include: an anode current collector; a protective layer on (e.g., formed on) the anode current collector; a separator; a gel polymer electrolyte; and a cathode, wherein an anode active material layer may be arranged between the anode current collector and the protective layer, or the anode active material layer may be absent, and wherein the protective layer may include boron nitride (BN) and a binder, and the gel polymer electrolyte may contain a gel polymer, boron nitride (BN), butyronitrile, and a liquid electrolyte.

In the lithium battery according to one or more embodiments, the protective layer may have a thickness of about 1 µm to about 10 µm, and the separator may have a thickness of about 5 µm to about 20 µm. In this disclosure, the term "thickness" refers to an average thickness. If the thickness of the protective layer and the thickness of the separator are within the aforementioned ranges, respectively, the lithium battery with improved ionic conductivity and physical properties, and improved lifespan characteristics may be provided.

In the gel polymer electrolyte, the liquid electrolyte may contain an organic solvent, and the organic solvent may act as a medium through which ions involved in electrochemical reactions of the battery may migrate. The organic solvent may be a carbonate-based solvent, an ester-based solvent, an ether-based solvent, a ketone-based solvent, an alcohol-based solvent, or an aprotic solvent, and/or a (e.g., any suitable) combination thereof.

Non-limiting examples of the carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate. (EC), propylene carbonate (PC), butylene carbonate (BC), and/or the like.

Non-limiting examples of the ester-based solvent may include methyl acetate, ethyl acetate, n-propyl acetate, dimethyl acetate, methyl propionate, ethyl propionate, decanolide, mevalonolactone, valerolactone, caprolactone, and/or the like.

Non-limiting examples of the ether-based solvent may include dibutyl ether, tetraglyme, diglyme, dimethoxyethane, 2-methyltetrahydrofuran, 2,5-dimethyltetrahydrofuran, tetrahydrofuran, and/or the like. Additionally, cyclohexanone and/or the like may be used as the ketone-based solvent. For the alcohol-based solvent, ethyl alcohol, isopropyl alcohol, and/or the like may be used. For the aprotic solvent, any of the following may be used: nitriles such as R-CN (R is a straight-chain, branched, or ring-structured hydrocarbon group having 2 to 20 carbon atoms, and may include a double bond, an aromatic ring, or an ether group); amides such as dimethylformamide; dioxolanes such as 1,3-dioxolane and/or 1,4-dioxolane; sulfolanes, and/or the like.

For the organic solvent, a single organic solvent, or a (e.g., any suitable) mixture of two or more organic solvents may be used.

If the carbonate-based solvent is to be used, a mixture of a cyclic carbonate and a chain-type or kind carbonate may be used, wherein the cyclic carbonate and the chain-type or kind carbonate may be mixed in a volume ratio of about 1:1 to about 1:9.

According to one or more embodiments, the carbonate-based solvent/compound may include fluoroethylene carbonate (FEC) and diethyl carbonate (DEC), and a mixing weight ratio of FEC and DEC may be about 1:10 to about 1:1.

In one or more embodiments, the liquid electrolyte may further include a nitrile-based compound. The nitrile-based compound may be at least one selected from among succinonitrile (SN), adiponitrile (1,4-dicyanobutane or 1,6-hexanedinitrile), dicyanobutene (DCB), ethylene glycol bis(propionitrile)ether, hexanetricarbonitrile (HTCN), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile. An amount of the nitrile-based compound may be about 1 part by weight to about 5 parts by weight with respect to 100 parts by weight of the total weight of the gel polymer electrolyte. With such a nitrile-based compound, the gel polymer electrolyte having excellent or suitable high-voltage stability and improved ionic conductivity may be prepared.

The lithium salt may be a substance that dissolves in the organic solvent and acts as a source of lithium ions in a battery, and thereby enables the basic operation of a lithium secondary battery and promotes the migration of lithium ions between the cathode and the anode. For the lithium salt, in some embodiments, lithium difluorobis(oxalato)phosphate (LiDFBOP) and LiBF₄ may be used. A concentration of the lithium salt may be, for example, about 0.1 M to about 5.0 M, about 0.2 M to about 4.0 M, or about 0.3 M to about 4.0 M.

In one or more embodiments, the lithium salt may include one, or two or more selected from among LiPF₆, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are each an integer of 1 to 20), lithium trifluoromethanesulfonate, lithium tetrafluoroethanesulfonate, and lithium bis(oxalato)borate (LiBOB). The concentration of the lithium salt may be, for example, about 0.1 M to about 5.0 M.

According to one or more embodiments, the lithium salt may include a first lithium salt and a second lithium salt.

With the gel polymer electrolyte that includes the first lithium salt and the second lithium salt, the ionic conductivity of the gel polymer electrolyte may improve.

The first lithium salt and the second lithium salt may each be a borate-based lithium salt. The borate-based lithium salt may have improved high-temperature stability compared to phosphorous-based lithium salts and may suppress or reduce the formation of hydrofluoric acid (HF). Because the first lithium salt and the second lithium salt include a borate-based lithium salt, the high-temperature cycling performance of the lithium battery may improve.

For example, in one or more embodiments, the first lithium salt and the second lithium salt may each independently be a fluorine-containing borate-based lithium salt. Because the first lithium salt and the second lithium salt include a fluorine-containing borate-based lithium salt, the composition of SEI layer formed during charging and discharging of a lithium battery may be more effectively modified. For example, as the fluorine (F) content (e.g., amount) of the SEI layer increases, the structural stability of the SEI layer may increase, and side reactions with organic solvents may be effectively suppressed or reduced. As a result, the reversibility of electrode reactions in a lithium battery may improve.

In one or more embodiments, the first lithium salt and the second lithium salt may be, for example, a non-cyclic lithium borate salt and a cyclic lithium borate salt, respectively. With a non-cyclic lithium salt as the first lithium salt, the ionic conductivity of the gel polymer electrolyte may be increased more effectively. With the second lithium salt that is a cyclic lithium salt, the aggregation of anions increases, and as a result, the lithium salt may be more effectively involved in modifying the composition of the SEI layer, and the high-temperature stability of the gel polymer electrolyte may improve.

Not including the first lithium salt may cause a decrease in the ionic conductivity of the gel polymer electrolyte. Not including the second lithium salt may cause a decrease in the structural stability of the SEI layer.

The fluorine-containing borate-based lithium salt may include LiBF₄, LiBF₃(C₂F₅), a compound represented by any one selected from among Formulas 5 to 16, and/or a (e.g., any suitable) combination thereof.

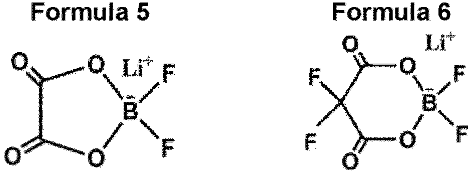

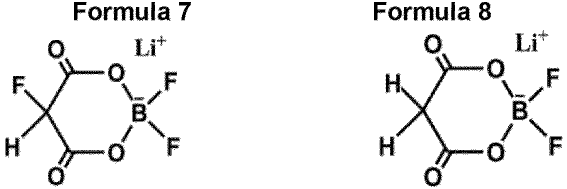

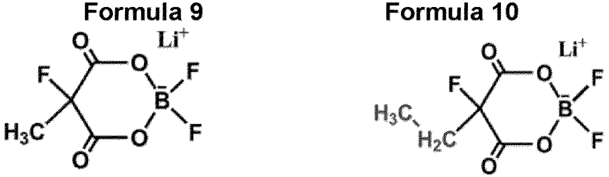

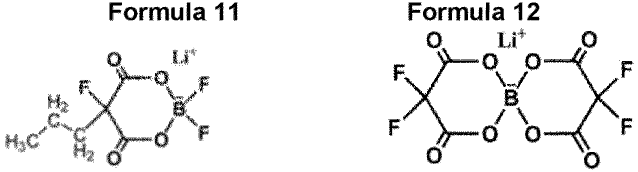

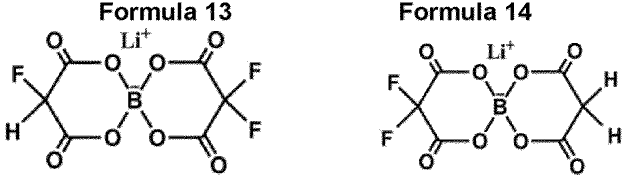

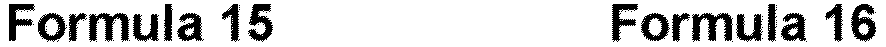

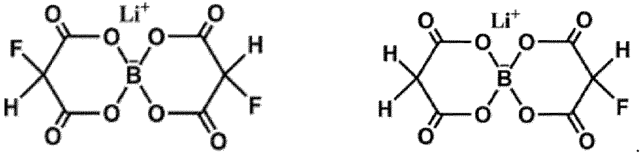

In one or more embodiments, the first lithium salt may include, for example, LiBF₄, and the second lithium salt may include a compound selected from among compounds represented by Formulas 5 to 16.

In one or more embodiments, the first lithium salt may include LiBF₄, and the second lithium salt may include, for example, LiDFOB(lithium difluoro(oxalate)borate).

As described above, the liquid electrolyte according to one or more embodiments may include lithium difluoro(oxalato)borate (LiBFOB), LiBF₄, butyronitrile (BN), and FEC, and may include a carbonate-based compound.

The gel polymer electrolyte may not include (e.g., may exclude), for example, a phosphorous-based lithium salt. With the gel polymer electrolyte that does not contain phosphorous lithium salts, the high-temperature stability of the gel polymer electrolyte may improve, and the formation of hydrofluoric acid (HF) may be suppressed or reduced.

The gel polymer electrolyte may not include (e.g., may exclude), for example, lithium bis(oxalato)borate (LiBOB). With the gel polymer electrolyte that does not contain L

iBOB, the ionic conductivity of the gel polymer electrolyte may further improve and the solubility of lithium salt in a carbonate solvent may further improve.

In one or more embodiments, an amount of the first lithium salt and the amount of the second lithium salt in the gel polymer electrolyte may each independently be more than 0 M to about 1.2 M, from about 0.1 M to about 1.0 M, or from about 0.4 M to about 0.8 M. If the amount of the first lithium salt and the amount of the second lithium salt are each within the aforementioned ranges, the gel polymer electrolyte may provide excellent or suitable ionic conductivity and allow the formation of a structurally stable SEI layer at the same time.

For example, in one or more embodiments, the amount of the first lithium salt and the amount of the second lithium salt may each independently be more than 0 M to about 1.2 M, from about 0.1 M to about 1.0 M, or from about 0.4 M to about 0.8 M, with respect to a gel polymer electrolyte-forming precursor composition (e.g., gel polymer electrolyte-forming composition) before addition of the first polymerizable monomer, the second polymerizable monomer, and a thermal initiator.

An amount ratio of the first lithium salt to the second lithium salt may be, for example, about 1:9 to about 9:1, about 3:7 to about 7:3, or about 4:6 to about 6:4. If the amount ratio of the first lithium salt to the second lithium salt are within the aforementioned ranges, the gel polymer electrolyte may provide excellent or suitable ionic conductivity and allow the formation of a structurally stable SEI layer at the same time. The content (e.g., amount) ratio of the first lithium salt to the second lithium salt may be, for example, a molar ratio.

In one or more embodiments, the gel polymer electrolyte may include a first organic solvent and a second organic solvent. Because the gel polymer electrolyte includes the first organic solvent and the second organic solvent, the interfacial resistance between the gel polymer electrolyte and the cathode and/or the interfacial resistance between the gel polymer electrolyte and a lithium metal layer being plated during charging may be more effectively reduced. The first organic solvent and the second organic solvent may each include, for example, a carbonate-based compound. In one or more embodiments, the first organic solvent and the second organic solvent may each be, for example, a carbonate-based organic solvent. Because the gel polymer electrolyte includes a carbonate-based first organic solvent and a carbonate-based second organic solvent, the first lithium salt and the second lithium salt may be easily dissolved in the organic solvents, and the viscosity of the gel polymer electrolyte-forming precursor composition may decrease. In one or more embodiments, the first organic solvent may include, for example, a linear carbonate compound. With a linear carbonate-based solvent as the first organic solvent, the viscosity of the gel polymer electrolyte-forming precursor composition before crosslinking may be lowered. This may make handling of the gel polymer electrolyte-forming precursor composition easier. The second organic solvent may include, for example, a cyclic carbonate compound substituted with a substituent group. Substituent groups in the cyclic carbonate compound may include, for example, a halogen, a cyano group (CN), a nitro group (NO₂), and/or a (e.g., any suitable) combination thereof. With the second organic solvent that is a cyclic carbonate-based solvent substituted with substituent groups, the first lithium salt and the second lithium salt may be more easily dissolved in the gel polymer electrolyte forming-precursor composition, and as the substituent groups are involved in the formation of an SEI layer, the structural stability of the SEI layer may improve. The first organic solvent may include, for example, diethyl carbonate (DEC), dimethyl carbonate (DMC), ethyl methyl carbonate (EMC), methyl propyl carbonate, ethyl propyl carbonate, dipropyl carbonate, and/or a (e.g., any suitable) combination thereof. The second organic solvent may include, for example, a vinylene carbonate substituted with one or more substituents selected from among a halogen, a cyano group (CN), and a nitro group (NO₂); a vinylethylene carbonate substituted with one or more substituents selected from among a halogen, a cyano group (CN), and a nitro group (NO₂); fluoroethylene carbonate (FEC); a fluoroethylene carbonate substituted with one or more substituents selected from among a halogen, a cyano group (CN), and a nitro group (NO₂); and/or a (e.g., any suitable) combination thereof. In one or more embodiments, the first organic solvent may include, for example, diethyl carbonate, and the second organic solvent may include, for example, a fluorine-substituted cyclic carbonate compound. In some embodiments, the second organic solvent may include, for example, fluoroethylene carbonate. For example, the gel polymer electrolyte may not contain an unsubstituted cyclic carbonate-based solvent. With the gel polymer electrolyte that does not contain an unsubstituted cyclic carbonate-based solvent, the first lithium salt and the second lithium salt may be more easily dissolved in the gel polymer electrolyte-forming precursor composition. A volume ratio of the first organic solvent to the second organic solvent may be, for example, about 5.5:4.5 to about 9:1, about 6:4 to about 9:1, about 6:4 to about 8:2, or about 6:4 to about 7:3. If the volume ratio of the first organic solvent to the second organic solvent is within the aforementioned ranges, the gel polymer electrolyte-forming composition having excellent or suitable lithium salt solubility and low viscosity may be provided. The gel polymer electrolyte obtained from the gel electrolyte-forming composition having excellent or suitable lithium salt solubility and low viscosity may provide excellent or suitable mechanical properties and improved ionic conductivity.

The gel polymer electrolyte may be present within the separator and at the interface between the separator and the anode. Further, the gel polymer electrolyte may be contained in a portion of the cathode.

In one or more embodiments, a weight average molecular weight of the first polymerizable monomer may be about 500 to about 50,000, or about 1,000 to about 45,000. If the weight average molecular weight of the first polymerizable monomer is smaller than the aforementioned ranges, the density of crosslinked points within the molecular structure of the polymer after crosslinking may be too high such that the migration of lithium salts may be hindered. If the weight average molecular weight of the first polymerizable monomer is larger than the aforementioned ranges, the density of crosslinked points within the molecular structure of the polymer after crosslinking may be too low such that the ability to block or reduce electrolyte may be diminished.

In one or more embodiments, a weight average molecular weight of the second polymerizable monomer may be about 500 to about 50,000. If the weight average molecular weight of the second polymerizable monomer is within the aforementioned range, the manufacture of a lithium battery with highly improved ionic conductivity and increased lifespan may be facilitated.

In one or more embodiments, the gel polymer electrolyte may further include one or more selected from among an ionic liquid and a polymeric ionic liquid.

The ionic liquid may include one or more selected from among diethylmethylammonium trifluoromethanesulfonate ([dema][TfO]), dimethylpropylammonium trifluoromethanesulfonate ([dmpa][TfO]), N,N-diethyl-N-methyl-N-(2-methoxyethyl)ammonium bis(trifluoromethanesulfonyl)imide ([DEMA][TFSI]), N-methyl-N-propylpiperidinium bis(trifluoromethanesulfonyl)imide ([PP13][TFSI]), N-butyl-N-methyl pyrrolidinium bis(trifluoromethanesulfonyl)imide ([Py14][TFSI]), and methylpropylpiperidiniumtrifluoromethanesulfonylimide ([mpp][TFSI]]).

In one or more embodiments, a separator containing the gel polymer electrolyte may be prepared separately to form a free-standing film, the separator containing the gel polymer electrolyte may be arranged on an anode current collector and a protective layer, and a cathode may be then arranged thereon to produce a lithium battery. In one or more embodiments, the protective layer may not be provided.

In some one or more embodiments, once an anode current collector and a protective layer are positioned, a separator and a cathode may be arranged thereon to form a battery structure. Then, the battery structure may be injected with a gel polymer electrolyte-forming composition and subjected to a heat treatment, to prepare a lithium battery having a separator containing the gel polymer electrolyte.

According to one or more embodiments of the present disclosure, a lithium battery may include a cathode, an anode current collector, and an electrolyte layer between the cathode and the anode current collector, wherein the electrolyte layer may include the gel polymer electrolyte.

In one or more embodiments, the gel polymer electrolyte may have an ionic conductivity of about 0.30 mS/cm or more, for example, about 0.38 mS/cm or more, at 25 °C and 1 atm, and an ionic conductivity of about 0.42 mS/cm or more, for example, about 0.47 mS/cm or more, at 45 °C and 1 atm. By using the gel polymer electrolyte having the aforementioned ionic conductivities, a lithium battery with improved cycle characteristics may be provided.

In one or more embodiments, the lithium battery may further include a separator on the anode current collector. The separator may contain the gel polymer electrolyte.

In one or more embodiments, a lithium battery may have a structure including a cathode; an anode current collector; a separator between the cathode and the anode current collector; and a gel-type or kind polymer electrolyte (e.g., the gel polymer electrolyte of the present disclosure) positioned on top of the separator. The gel-type or kind polymer electrolyte may be positioned between the separator and the cathode.

In one or more embodiments, an anode active material layer or a protective layer positioned between the anode current collector and the separator may be included. In one or more embodiments, the anode active material layer or the protective layer may be absent.

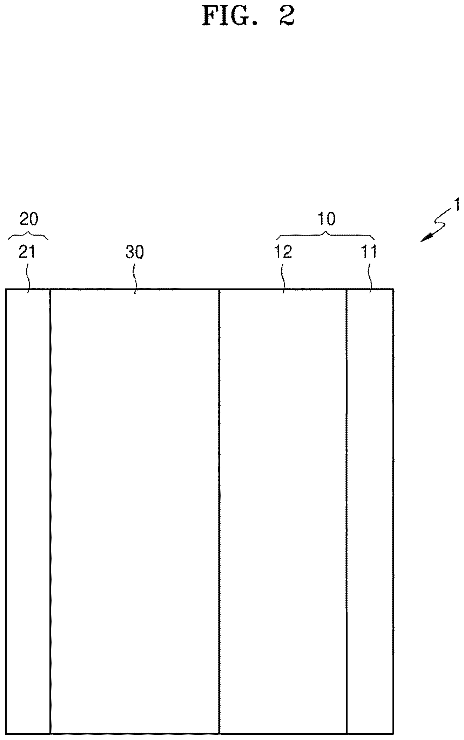

FIG. 2 shows a laminated structure of a lithium battery 1 according to one or more embodiments of the present disclosure. The lithium battery may be, for example, a lithium metal battery.

The lithium battery 1 may have a structure provided with an anode 20 including an anode current collector 21, wherein the anode 20 contains the anode current collector 21, and an electrolyte layer 30 is positioned between the anode current collector 21 and a cathode 10. In the anode 20, the anode active material layer may be absent. In one or more embodiments, a protective layer may be formed on the anode current collector 21.

The electrolyte layer 30 may contain the gel polymer electrolyte. In one or more embodiments, the electrolyte layer 30 may further include a separator. The separator may include a porous substrate, or may include the porous substrate and a coating layer formed on the porous substrate.

The cathode 10 may contain a cathode active material layer 12 and a cathode current collector 11. The separator 30 may contain the gel polymer electrolyte.

If the electrolyte layer includes a porous substrate, the gel polymer electrolyte may be positioned between the porous substrate and the cathode. The gel polymer electrolyte may be contained in the porous substrate.

In one or more embodiments, the gel polymer electrolyte may be contained in the cathode 10.

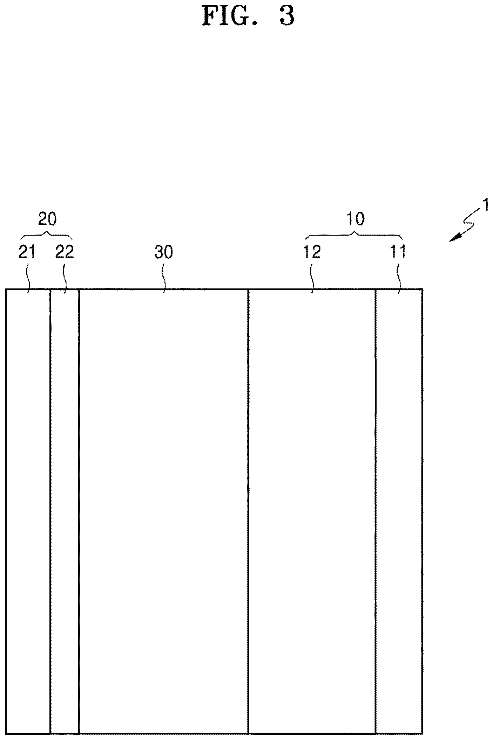

As shown in FIG. 3, a lithium metal layer 22 may be further arranged between the anode current collector 21 and the electrolyte layer 30. The lithium metal layer may correspond to an anode active material layer. The lithium metal layer may include lithium metal or a lithium alloy.

In one or more embodiments, the protective layer may be arranged between the lithium metal layer and the electrolyte layer. The protective layer may be a lithium ion-conductive buffer layer, and as an electrolyte layer, prevent or reduce the separator containing the gel polymer electrolyte from coming in contact with the lithium metal layer. In addition, the protective layer may hinder the formation and growth of lithium dendrites on the anode current collector.

In one or more embodiments, the lithium metal layer may also be positioned during battery assembly.

In the anode of the lithium battery according to one or more embodiments, the expansion rate in anode thickness as expressed by Equation 1 may be 150% or less. Expansion Rate in Anode Thickness (%)=[Thickness of Lithium Plated Layer Formed on Anode Current Collector after 100 Cycle Charging/Thickness of Lithium Plated Layer Formed on Anode Current Collector after Formation]×100

For example, in one or more embodiments, the expansion rate in anode thickness may be 140 % or less, 139 % or less, 138 % or less, 136 % or less, about 105 % to about 136 %, or about 110 % to about 136 %. By including a binder containing a crosslinked polymer with an increased modulus, which increases the strength of the binder, in the protective layer, the volume change of the anode during charging and discharging may be suppressed or reduced. For the charging and discharging conditions, refer to Evaluation Examples.

Non-limiting examples of the binder in the protective layer may include a vinylidene fluoride-hexafluoropropylene (VDF-HFP) copolymer, polyethylene oxide, polypropylene oxide, polydimethylsiloxane, polyacrylonitrile, polymethyl (meth)acrylate, polyvinyl chloride, polyvinylidene fluoride, polyvinylidene fluoride-co-hexafluoropropylene, polyethyleneimine, polyphenylene terephthalamide, polymethoxypolyethylene glycol (meth)acrylate, poly2-methoxy ethylglycidyl ether, and/or a (e.g., any suitable) combination thereof.

In one or more embodiments, the binder in the protective layer may include, for example, a crosslinked polymer of a first polymer and a second polymer, wherein the crosslinked polymer may be a product of crosslinking between a first polymer containing hydroxyl groups and a second polymer having a functional group that is crosslinkable with the first polymer.

A weight ratio of the first polymer to the second polymer may be about 50:50 to about 99:1, and the second polymer may be one or more selected from among a fluorine-containing polyamic acid having a carboxyl group and a fluorine-containing polyimide having a carboxyl group.

The protective layer may be dense and have increased density and strength, and thus allow lithium ions to move freely and improve the transfer of lithium ions, thereby improving lithium plating characteristics. This may lead to an increased ionic conductivity and thereby improve the high-rate capability of a lithium battery. In addition, as the protective layer is arranged on the anode active material layer, side reactions between the anode active material layer and the electrolyte may be effectively blocked and suppressed or reduced.

In one or more embodiments, the protective layer may further include an inorganic material. The inorganic material may be any one selected from among silica (SiO₂), alumina (Al₂O₃), titanium oxide (TiO₂), lithium titanium oxide (LiTiO₂), barium titanium oxide (BaTiO₂), lithium alumina (LiAlO₂), and zeolite, or may be a mixture thereof.

In one or more embodiments, a mixing weight ratio of the first polymer containing hydroxyl groups to the second polymer may be adjusted to be within a range of about 50:50 to about 99:1, about 50:50 to about 90:10, or about 60:40 to about 90:10.

If the protective layer according to one or more embodiments is present on a surface of the anode active material layer containing lithium metal, the formation and/or growth of lithium dendrites on the anode current collector may be effectively prevented or reduced. In addition, the anode containing the aforementioned protective layer, and a lithium battery employing the anode may have improved cycling performance and stability.

The first polymer containing hydroxyl groups may be carboxymethylcellulose (CMC); polyvinyl alcohol (PVA); or a product of polymerization of, or a hydrolysate of one or more monomers selected from among vinyl acetate, butyl (meth)acrylate, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, 2-hydroxypropylene glycol (meth)acrylate, acrylic acid, methacrylic acid, 2-(meth)acryloyloxy acetic acid, 3-(meth)acryloyloxy propionic acid, 4-(meth)acryloyloxy butyric acid, itaconic acid, maleic acid, 2-isocyanatoethyl (meth)acrylate, 3-isocyanatopropyl (meth)acrylate, 4-isocyanatobutyl (meth)acrylate, (meth)acrylamide, ethylenedi(meth)acrylate, diethylene glycol (meth)acrylate, triethylene glycol di(meth)acrylate, trimethylenepropane tri(meth)acrylate, trimethylenepropane triacrylate, 1,3-butanediol (meth)acrylate, 1,6-hexanediol di(meth)acrylate, allyl acrylate, and N-vinyl caprolactam.

In one or more embodiments, the first polymer may be polyvinyl alcohol (PVA). For example, the polyvinyl alcohol may be a hydrolysate obtained by hydrolyzing polyvinyl acetate with an alkali.

A degree of saponification of the polyvinyl alcohol may be about 60 % to about 99 %, about 70 % to about 95 %, about 75 % to about 90 %, or about 80 % to about 90 %. For example, in some embodiments, the degree of saponification of the polyvinyl alcohol may be about 85 % to about 90 %.

If the degree of hydrolysis of the polyvinyl alcohol is within the aforementioned ranges, physical properties of the protective layer may further improve.

A weight average molecular weight of the first polymer may be about 10,000 Dalton to about 500,000 Dalton, about 10,000 Dalton to about 500,000 Dalton, about 10,000 Dalton to about 400,000 Dalton, about 10,000 Dalton to about 300,000 Dalton, about 10,000 Dalton to about 200,000 Dalton, about 50,000 Dalton to about 150,000 Dalton, about 70,000 Dalton to about 100,000 Dalton, or about 80,000 Dalton to about 100,000 Dalton. If the weight average molecular weight of the first polymer is within the aforementioned range, physical properties of the protective layer may further improve.

In one or more embodiments, the protective layer may further include a second polymer that has a functional group crosslinkable with the first polymer containing hydroxyl groups. In one or more embodiments, the protective layer may further include a crosslinked polymer of the first polymer and the second polymer.

The second polymer may include one or more selected from among a fluorine-containing polyimide having a carboxyl group and a fluorine-containing polyamic acid having a carboxyl group.

The fluorine-containing polyimide polyamic acid may be a polymer represented by Formula 17 or Formula 18, and the fluorine-containing polyimide may be a polymer represented by Formula 19 or Formula 20.

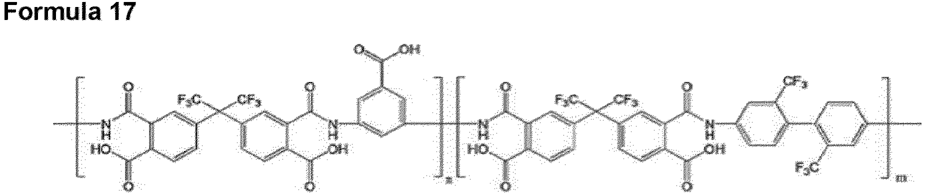

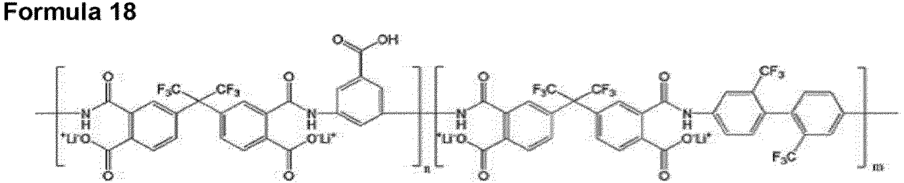

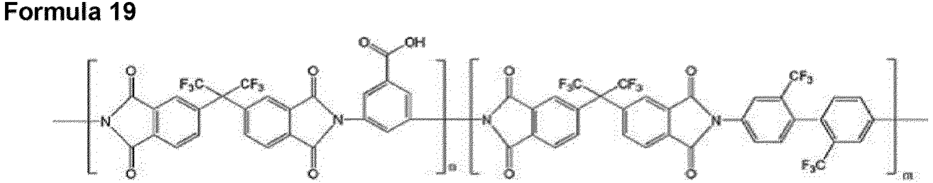

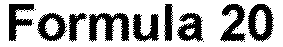

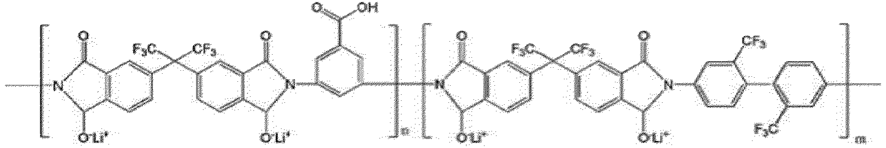

In Formulas 17 to 20, n and m may each be a mole fraction of a corresponding repeating unit, wherein 0<n≤1, 0≤m<1, and n+m=1.

For example, in one or more embodiments, the mole fraction of a repeating unit containing a crosslinking group and the mole fraction of a repeating unit not containing a crosslinking group in the second polymer may each satisfy 0<n≤0.5, 0.5≤m<1, and n+m=1. For example, in one or more embodiments, the mole fraction of a repeating unit containing a crosslinking group and the mole fraction of a repeating unit not containing a crosslinking group in the second polymer may each satisfy 0.1≤n≤0.4, 0.6≤m≤0.9, and n+m=1. For example, in one or more embodiments, the mole fraction of a repeating unit containing a crosslinking group and the mole fraction of a repeating unit not containing a crosslinking group in the second polymer may each satisfy 0.15≤n≤0.35, 0.65≤m≤0.85, and n+m=1. For example, in one or more embodiments, the mole fraction of a repeating unit containing a crosslinking group and the mole fraction of a repeating unit not containing a crosslinking group in the second polymer may each satisfy 0.2≤n≤0.3, 0.7≤m≤0.8, and n+m=1. When the mole fractions are within the aforementioned ranges, further improved physical properties may be provided.

According to one or more embodiments, a ratio of n to m may be about 1:1.5 to about 1:5, about 1:2 to about 1:4, or 1:3.

For example, in some embodiments, the second polymer may be a random copolymer. For example, in some embodiments, the second polymer may be a block copolymer.

In one or more embodiments, a weight average molecular weight of the second polymer may be about 10,000 Dalton to about 1,200,000 Dalton, about 10,000 Dalton to about 1,100,000 Dalton, about 10,000 Dalton to about 1,000,000 Dalton, about 10,000 Dalton to about 500,000 Dalton, about 100,000 Dalton to about 500,000 Dalton, or about 100,000 Dalton to about 400,000 Dalton, or may be, for example, about 100,000 Dalton to about 300,000 Dalton. If the weight average molecular weight of the second polymer is within the aforementioned ranges, physical properties of the protective layer may further improve.

In one or more embodiments, a weight ratio of the first polymer containing hydroxyl groups to the second polymer in the protective layer may be about 99:1 to about 50:50, about 95:5 to about 55:45, about 95:5 to about 60:40, about 95:5 to about 65:35, or about 90:10 to about 70:30. If the weight ratio of the first polymer to the second polymer is within the aforementioned ranges, physical properties of the protective layer may further improve.

The hydroxyl groups in the first polymer and the carboxyl groups in the second polymer may react with each other to form an ester bond, to thereby form a third polymer in which the first and second polymers are crosslinked. The stability of the protective layer may improve due to the formation of the third polymer, and in the case of halogen groups, e.g., fluorine groups, may reduce the formation of irreversible lithium-containing substances and thereby improve interfacial stability.

In one or more embodiments, a weight average molecular weight of the third polymer may be about 10,000 Dalton to about 1,500,000 Dalton. For example, in some embodiments, the weight average molecular weight of the third polymer may be about 10,000 Dalton to about 1,200,000 Dalton. For example, in some embodiments, the weight average molecular weight of the third polymer in the binder may be about 10,000 Dalton to about 1,100,000 Dalton. For example, in some embodiments, the weight average molecular weight of the third polymer may be about 10,000 Dalton to about 1,000,000 Dalton. For example, in some embodiments, the weight average molecular weight of the third polymer may be about 10,000 Dalton to about 500,000 Dalton. For example, in some embodiments, the weight average molecular weight of the third polymer may be about 100,000 Dalton to about 500,000 Dalton. For example, in some embodiments, the weight average molecular weight of the third polymer may be about 100,000 Dalton to about 400,000 Dalton. For example, in some embodiments, the weight average molecular weight of the third polymer may be about 100,000 Dalton to about 300,000 Dalton. If the weight average molecular weight of the third polymer is within the aforementioned ranges, physical properties of the protective layer may further improve.

The protective layer according to one or more embodiments may include a crosslinked polymer of a polyvinyl alcohol and a polyamic acid as a crosslinked polymer. The polyamic acid may be, for example, a polymer represented by Formula 17 or Formula 18.

According to one or more embodiments, the crosslinked polymer of the protective layer may be a crosslinked polymer of a polyvinyl alcohol and a fluorinated polyimide (PVA/PI-f). The fluorinated polyimide may be a polymer represented by Formula 19 or Formula 20.

In one or more embodiments, the protective layer may include a binder containing a polar functional group and may be free of lithium salt.

In one or more embodiments, the protective layer may further include a lithium salt, and if the protective layer contains a lithium salt, excellent or suitable ionic conductivity of the protective layer may be ensured. The lithium salt may be, for example, one or more substances such as LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄)₂.

In the anode according to one or more embodiments, a lithium metal layer may be arranged between the anode current collector and the electrolyte layer. The lithium metal layer may be arranged at the time of battery assembly, or may be formed during charging. The lithium metal layer may correspond to an anode active material layer.

The lithium metal layer may include a lithium metal foil, lithium metal powder, a lithium alloy foil, lithium alloy powder, and/or a (e.g., any suitable) combination thereof, wherein the lithium alloy may contain lithium and a first metal.

In one or more embodiments, the lithium alloy may contain lithium and a first metal, and the first metal may be indium (In), silicon (Si), gallium (Ga), tin (Sn), aluminum (Al), zirconium (Zr), niobium (Nb), germanium (Ge), antimony (Sb), bismuth (Bi), gold (Au), platinum (Pt), palladium (Pd), magnesium (Mg), silver (Ag), zinc (Zn), chromium, cesium, sodium, potassium, calcium, yttrium, bismuth, tantalum, hafnium, barium, vanadium, strontium, lanthanum, and/or a (e.g., any suitable) combination thereof.

In one or more embodiments, the lithium alloy may be an alloy of lithium and a metal alloyable with lithium, and may include, for example, a lithium-silver alloy, a lithium-zinc alloy, a lithium-magnesium alloy, a lithium-tin alloy, and/or the like. In some embodiments, the anode active material layer including a lithium metal foil may be, for example, a lithium metal layer. In some embodiments, the anode active material layer including lithium alloy foil may be, for example, a lithium alloy layer. In one or more embodiments, the anode active material layer containing lithium metal powder and/or lithium alloy powder may be introduced by coating a slurry containing lithium powder and a binder onto the anode current collector. The binder may be, for example, a fluorine-based binder, such as polyvinylidene fluoride (PVDF). In some embodiments, the anode active material layer may not include (e.g., may exclude) a carbon-based anode active material. In one or more embodiments, the anode active material layer may be formed of a metal-based anode active material.

The lithium metal layer may have a thickness of, for example, about 1 µm to about 50 µm, about 1 µm to about 30 µm, about 10 µm to about 30 µm, or about 10 µm to about 80 µm. With the lithium metal layer having a thickness in the aforementioned ranges, the cycling performance and lifespan characteristics of the lithium battery may further improve.

In one or more embodiments, a thickness of the lithium metal layer 22 may be, for example, less than a thickness of the electrolyte layer 30. In some embodiments, the thickness of the lithium metal layer 22 may be, for example, 70% or less, 60% or less, 50% or less, 40% or less, or 30% or less, with respect to the thickness of the electrolyte layer 30. In some embodiments, the thickness of the lithium metal layer 22 may be, for example, about 1 % to about 70 %, about 1 % to about 60 %, about 1 % to about 50 %, about 1 % to about 40 %, or about 1 % to about 30 %, with respect to the thickness of the electrolyte layer 30. As the thickness of the lithium metal layer 22 becomes smaller relative to the thickness of the electrolyte layer 30, volume changes during charging and discharging of the lithium battery 1 may be suppressed or reduced. This as a result may suppress or reduce deterioration in the lithium battery 1 caused by volume changes.

In one or more embodiments, the thickness of the lithium metal layer 22 may be, for example, less than a thickness of the cathode active material layer 12. For example, in some embodiments, the thickness of the lithium metal layer 22 may be 70 % or less, 60 % or less, 50 % or less, 40 % or less, or 30 % or less, with respect to the thickness of the cathode active material layer 12. In some embodiments, The thickness of the lithium metal layer 22 may be, for example, about 1 % to about 70 %, about 1 % to about 60 %, 1 % to about 50 %, about 1 % to about 40 %, or about 1 % to about 30 %, with respect to the thickness of the cathode active material layer 12. As the thickness of the lithium metal layer 22 becomes smaller relative to the thickness of the cathode active material layer 12, volume changes during charging and discharging of the lithium battery 1 may be suppressed or reduced. This as a result may suppress or reduce deterioration in the lithium battery 1 caused by volume changes.

In one or more embodiments, in an X-ray photoelectron spectroscopy (XPS) analysis on the surface of the lithium metal layer 22, for example, the intensity of a peak originating from fluorine (F) may be greater than the intensity of a peak originating from oxygen (O). In some embodiments, in the XPS analysis on the surface of the lithium metal layer 22, for example, the intensity of the peak originating from fluorine (F) may be more than 100 %, 105 % or more, 110 % or more, or 120 % or more, relative to the intensity of the peak originating from oxygen (O). In some embodiments, in the XPS analysis on the surface of the lithium metal layer 22, for example, the intensity of the peak originating from fluorine (F) may be more than 100 % to about 200 %, about 105 % to about 200 %, about 110 % to about 200 %, or about 120 % to about 200 %, relative to the intensity of the peak originating from oxygen (O). Because the SEI layer formed on the surface of the lithium metal layer 22 mainly includes inorganic compounds containing fluorine (F), the structural stability of the SEI layer may improve. This as a result may improve the cycling performance of the lithium battery 1. For example, if the SEI layer formed on the surface of the lithium metal layer 22 mainly contains an organic compound containing oxygen (O), the structural stability of the SEI layer may decrease. The peak originating from fluorine (F) may be, for example, a peak originating from fluorine (F) 1s orbital. The peak originating from oxygen (O) may be, for example, a peak originating from oxygen (O) 1s orbital.

In one or more embodiments, the lithium metal layer 22 may be plated by charging after assembly of the lithium battery 1, and because the lithium battery 1 does not include the lithium metal layer 22 at the time of its assembly, the energy density of the lithium battery 1 may increase. If the lithium metal layer 22 is further provided by charging after assembly of the lithium battery 1, the region between the anode 20, for example, the anode current collector 21, and the electrolyte layer 30 may be a Li-free region free of lithium (Li) in an initial state or in a completely discharged state of the lithium battery 1.

In one or more embodiments, a particle diameter of the lithium powder may be, for example, about 0.1 µm to about 3 µm, about 0.1 µm to about 2 µm, or about 0.1 µm to about 2 µm. With the lithium powder having a particle diameter in the aforementioned ranges, the lifespan characteristics of a lithium battery may further improve.

In one or more embodiments, the anode may further include an anode active material layer.

The anode active material layer may contain a carbon-based compound; a mixture of a carbon-based material and one or more selected from among a first metal; a composite of a carbon-based material and one or more selected from among the first metal; and/or a (e.g., any suitable) combination thereof, wherein the carbon-based material may include amorphous carbon, and the amorphous carbon may have an average particle diameter of about 10 nm to about 100 nm. The carbon-based material may include carbon black, carbon nanotubes, carbon nanofibers, a fullerene, activated carbon, carbon fibers, and/or a (e.g., any suitable) combination thereof.

The first metal may be indium (In), silicon (Si), gallium (Ga), tin (Sn), aluminum (Al), zirconium (Zr), niobium (Nb), germanium (Ge), antimony (Sb), bismuth (Bi), gold (Au), platinum (Pt), palladium (Pd), magnesium (Mg), silver (Ag), zinc (Zn), chromium, cesium, sodium, potassium, calcium, yttrium, bismuth, tantalum, hafnium, barium, vanadium, strontium, lanthanum, and/or a (e.g., any suitable) combination thereof.

In one or more embodiments, the lithium metal layer may be further arranged between the anode current collector and one side of the protective layer. In some embodiments, the lithium metal layer may be further arranged on the other side opposing the one side of the protective layer.

In one or more embodiments, the protective layer may have a thickness of about 1 µm to about 10 µm, about 1 µm to about 8 µm, about 1 µm to about 7 µm, about 2 µm to about 6 µm, or about 3 µm to about 5 µm. If the thickness of the protective layer is within the aforementioned ranges, the internal resistance of the lithium battery may increase, and without a decrease in the energy density of the lithium battery, excellent or suitable energy density and improved high-rate capability and lifespan characteristics may be provided.

In the lithium battery according to one or more embodiments, the electrolyte layer may further contain an electrolyte. The electrolyte may be a liquid electrolyte, a solid electrolyte, a gel electrolyte, or a (e.g., any suitable) combination thereof.

The solid electrolyte may include an oxide-based solid electrolyte, a sulfide-based solid electrolyte, a polymer solid electrolyte, and/or a (e.g., any suitable) combination thereof. For example, in some embodiments, the gel electrolyte may have a gel state while not containing a polymer.

In some embodiments, the gel electrolyte may include a polymer gel electrolyte. In one or more embodiments, the cathode may include a cathode current collector and a cathode active material layer, wherein at least one of the cathode current collector or the anode current collector may include a base film and a metal layer arranged on one side or both sides (e.g., two opposite sides) of the base film, the base film may include a polymer, and the polymer may include polyethylene terephthalate (PET), polyethylene (PE), polypropylene (PP), polybutylene terephthalate (PBT), polyimide (PI), and/or a (e.g., any suitable) combination thereof, and

the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In one or more embodiments, the anode active material layer may have a thickness of, for example, about 0.1 µm to about 500 µm, about 1 µm to about 500 µm, or about 10 µm to about 500 µm, but without being limited thereto, the thickness of the anode active material layer may be adjusted according to the shape, capacity, and/or the like., being desired or required of a lithium battery. If the thickness of the anode active material layer is within the aforementioned ranges, the cycling performance of the lithium battery may improve without decrease in energy density.
In one or more embodiments, the lithium battery according to one or more embodiments may not include (e.g., may exclude) an anode active material layer positioned between the anode current collector 21 and the protection layer. The anode free of the anode active material layer, after being introduced into the lithium battery with the cathode and the electrolyte, may include an anode active material layer formed by plating of lithium metal between the anode current collector 21 and the protective layer upon charging. The anode active material layer may be a plated lithium layer.

In one or more embodiments, the lithium battery may further include a separator.

The separator may have a pore diameter of about 0.01 µm to about 10 µm, and may have a thickness of about 5 µm to about 20 µm. Non-limiting examples of the separator may include an olefin-based polymer such as polypropylene; and a sheet, a nonwoven fabric, and/or the like each made of glass fibers, polyethylene, and/or the like. If a solid polymer electrolyte is used as the electrolyte, the solid polymer electrolyte may act as a separator as well as an electrolyte.

The separator may be a multi-layer film of olefin-based polymers, e.g., a multi-layer film of two or more layers of polyethylene and/or polypropylene, or a mixed multi-layer film, such as a double-layer separator of polyethylene/polypropylene, a triple-layer separator of polyethylene/polypropylene/polyethylene, or a triple-layer separator of polypropylene/polyethylene/polypropylene.

In the lithium battery according to one or more embodiments, the liquid electrolyte may contain a lithium salt and an organic solvent.

Non-limiting examples of the organic solvent may include aprotic organic solvents, such as N-methyl-2-pyrrolidinone, propylene carbonate, ethylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate. Among the aforementioned examples, a carbonate-based solvent such as propylene carbonate, ethylene carbonate, butylene carbonate, dimethyl carbonate, diethyl carbonate and/or the like, may be used.

The lithium salt may be any lithium salt used in lithium secondary batteries. The lithium salt may be a substance easily soluble in the aforementioned nonaqueous organic solvents and as such, may be, for example, one or more substances selected from among LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄)₂.

The concentration of the lithium salt may be, for example, about 1 M to about 5 M, for example, about 1 M to about 2.5 M, in the liquid electrolyte. Within the aforementioned ranges, a sufficient amount of lithium ions necessary for charging and discharging of a lithium battery may be generated.

If the gel-type or kind polymer electrolyte is present in the pores of the porous substrate of the separator, the interfacial resistance between the cathode, anode, and separator may be minimized or reduced, facilitating the movement of lithium.

According to one or more embodiments, the anode active material layer may be arranged at the time of assembling a lithium battery. According to one or more embodiments, the anode active material layer may be formed by plating of lithium metal after charging. The anode active material layer may be a plated lithium layer.

The anode active material layer may include lithium metal or a lithium alloy.

If the anode active material layer is to be arranged at the time of assembly, the anode active material layer may include a carbon-based material alone, or may include one or more selected from among carbon-based material, a metal, and a metalloid.

The carbon-based material may include amorphous carbon, the amorphous carbon may have an average particle diameter of about 10 nm to about 100 nm, and the carbon-based material may include carbon black (CB), acetylene black (AB), furnace black (FB), Ketjen black (KB), graphene, and/or a (e.g., any suitable) combination thereof.

In one or more embodiments, the anode active material layer may include a lithium metal foil, lithium metal powder, a lithium alloy foil, lithium alloy powder, and/or a (e.g., any suitable) combination thereof, wherein the lithium alloy may contain lithium and a first metal.

The first metal may be indium (In), silicon (Si), gallium (Ga), tin (Sn), aluminum (Al), zirconium (Zr), niobium (Nb), germanium (Ge), antimony (Sb), bismuth (Bi), gold (Au), platinum (Pt), palladium (Pd), magnesium (Mg), silver (Ag), zinc (Zn), chromium, cesium, sodium, potassium, calcium, yttrium, bismuth, tantalum, hafnium, barium, vanadium, strontium, lanthanum, or a (e.g., any suitable) combination thereof.

In one or more embodiments, the anode active material layer 22 may include, for example, a lithium foil, lithium powder, and/or a (e.g., any suitable) combination thereof. The lithium foil may include, for example, a lithium metal foil, a lithium alloy foil, and/or a (e.g., any suitable) combination thereof. The lithium powder may include lithium metal powder, lithium alloy powder, and/or a (e.g., any suitable) combination thereof. The lithium alloy may be an alloy of lithium and a metal alloyable with lithium, and may include, for example, a lithium-silver alloy, a lithium-zinc alloy, a lithium-magnesium alloy, a lithium-tin alloy, and/or the like. In some embodiments, the anode active material layer including a lithium metal foil may be, for example, a lithium metal layer. In some embodiments, the anode active material layer including a lithium alloy foil may be, for example, a lithium alloy layer. In some embodiments, the anode active material layer containing lithium metal powder and/or lithium alloy powder may be introduced by coating a slurry containing lithium powder and a binder onto the anode current collector. The binder may be, for example, a fluorine-based binder, such as polyvinylidene fluoride (PVDF). In some embodiments, the anode active material layer may not include (e.g., may exclude) a carbon-based anode active material. In one or more embodiments, the anode active material layer may be formed of a metal-based anode active material.

The anode current collector may be formed of a material that does not react with lithium, for example, does not form an alloy or a compound with lithium. No-limiting examples of the material forming the anode current collector may include copper (Cu), stainless steel, titanium (Ti), iron (Fe), cobalt (Co), nickel (Ni), and/or the like. However, the material forming the anode current collector 21 is not necessarily limited to the aforementioned materials but may be any suitable material available and/or utilized as an electrode current collector in the art. The anode current collector may be formed of one type or kind of the aforementioned metals, an alloy of two or more types (kinds) metals thereof, or a coating material. The anode current collector may be, for example, a plate type or kind or a foil type or kind.

In one or more embodiments, the cathode current collector may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector may have a thickness of, for example, about 1 µm to about 100 µm, about 1 µm to about 50 µm, about 5 µm to about 25 µm, or about 10 µm to about 20 µm.

The anode active material layer may contain an anode active material and a binder.

The anode active material may have, for example, a particulate form (e.g., in a form of particles). The anode active material having a particulate form may have, for example, an average particle diameter of about 10 nm to about 4 µm, about 10 nm to about 1 µm, about 10 nm to about 500 nm, about 10 nm to about 100 nm, or about 20 nm to about 80 nm. With the anode active material having an average particle diameter within the aforementioned ranges, reversible plating and/or dissolution of lithium during charging/discharging may be further facilitated. The average particle diameter of the anode active material may be, for example, a median particle diameter (D50) as measured by a laser-type or kind particle size distribution analyzer.

In one or more embodiments, the anode active material layer may include, for example, a carbon-based material and one or more selected from among a metal anode active material and a metalloid anode active material. The carbon-based anode active material may be, for example, amorphous carbon. Non-limiting examples of the carbon-based anode active material may include carbon black (CB), acetylene black (AB), furnace black (FB), Ketjen black (KB), graphene, and/or the like; however, the carbon-based anode active material is not limited to the aforementioned examples and may be any material that is categorized as amorphous carbon in the art. Amorphous carbon is carbon with no crystalline structure or with an extremely low degree of crystallinity and as such, may be distinct from crystalline carbon or graphitic carbon. The metal or metalloid anode active material may include one or more selected from among gold (Au), platinum (Pt), palladium (Pd), silicon (Si), silver (Ag), aluminum (Al), bismuth (Bi), tin (Sn), and zinc (Zn), but without being limited thereto, may be any material in the art that is used as a metal anode active material or a metalloid anode active material that forms an alloy or a compound with lithium. For example, nickel (Ni) does not form an alloy with lithium and is therefore not regarded as a metal anode active material in the present disclosure. The anode active material layer may include a single anode active material, and/or a (e.g., any suitable) mixture of multiple different types (kinds) of anode active materials among the aforementioned anode active materials. In some embodiments, the anode active material layer may include, for example, a mixture of amorphous carbon with one or more selected from among gold (Au), platinum (Pt), palladium (Pd), silicon (Si), silver (Ag), aluminum (Al), bismuth (Bi), tin (Sn), and zinc (Zn). A mixing weight ratio of the mixture (e.g., the amorphous carbon to the one or more metals) may be, for example, about 10:1 to about 1:2, about 10:1 to about 1:1, about 7:1 to about 1:1, about 5:1 to about 1:1, or about 4:1 to about 2:1. In some embodiments, The anode active material included in the anode active material layer may include, for example, a mixture of first particles composed of amorphous carbon, and second particles composed of a metal or a metalloid. Non-limiting examples of the metal may include gold (Au), platinum (Pt), palladium (Pd), silicon (Si), silver (Ag), aluminum (Al), bismuth (Bi), tin (Sn), zinc (Zn), and/or the like. An amount of the second particles may be about 8 wt% to about 60 wt%, about 10 wt% to about 50 wt%, about 15 wt% to about 40 wt%, or about 20 wt% to about 30 wt%, with respect to the total weight of the mixture. If the amount of the second particles is within the aforementioned ranges, the cycling performance of a lithium battery may further improve.

The binder included in the anode active material layer may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not limited to the aforementioned examples and may be any suitable material available and/or utilized as a binder in the art. The binder may be composed of a single type or kind of binder, or multiple binders of different types (kinds). If the anode active material layer does not include a binder, the anode active material layer may easily delaminate from the anode current collector 21. An amount of the binder included in the anode active material layer may be, for example, about 1 wt% to about 20 wt% with respect to the total weight of the anode active material layer.

A thickness of the anode active material layer may be, for example, about 0.1 µm to about 500 µm, or about 100 µm to about 50 µm. The thickness of the anode active material layer may be, for example, about 1 % to about 50 %, about 1 % to about 30 %, about 1 % to about 10 %, or about 1 % to about 5 %, with respect to the thickness of (100 % of) the cathode active material layer. If the thickness of the anode active material layer is in the aforementioned ranges, the energy density and cycling performance of a lithium battery employing the anode may improve without a decrease in the cycling performance of the lithium battery.

If the thickness of the anode active material layer decreases, for example, the charging capacity of the anode active material layer also decreases. The charge capacity of the anode active material layer may be, for example, about 0.1 % to about 50 %, about 1 % to about 30 %, about 1 % to about 10 %, about 1 % to about 5 %, or about 1 % to about 2 % with respect to the charge capacity of the cathode active material layer. If the charge capacity of the anode active material layer is excessively (or substantially) small, lithium dendrites formed between the anode active material layer and the anode current collector may cause the anode active material layer to disintegrate, thus making it difficult to improve the cycling performance of a lithium battery. If the charge capacity of the anode active material layer is excessively (or substantially) high, the energy density of a lithium battery employing the anode 20 may decrease, thus making it difficult to improve the cycling performance of the lithium battery. The charge capacity of the cathode active material layer may be obtained by multiplying the charge specific density (mAh/g) of a cathode active material by the mass of the cathode active material in the cathode active material layer. If multiple types (kinds) of cathode active materials are used, the product of charge specific density × mass may be calculated for each cathode active material, and the sum of these products may be defined as initial charge capacity of the cathode active material layer. The charge capacity of the anode active material layer may also be calculated in substantially the same manner. For example, the charge capacity of the anode active material layer may be obtained by multiplying the charge specific density (mAh/g) of an anode active material by the mass of the anode active material in the anode active material layer. If multiple types (kinds) of anode active materials are used, the product of charge specific density × mass may be calculated for each anode active material, and the sum of these products may be defined as the capacity of the anode active material layer. For example, the charge specific density of each of the cathode active material and the anode active material may be a capacity estimated using an all-solid half-cell using lithium metal as counter electrode. By the charge capacity measurement using an all-solid half-cell, the charge capacity of each of the cathode active material layer and the anode active material layer may be directly measured. Charge specific density may be obtained by dividing the measured charge capacity by the mass of the corresponding active material. In one or more embodiments, the charge capacity of each of the cathode active material layer and the anode active material layer may be the initial charge capacity measured during charging in the first cycle.

### Lithium Battery

The lithium battery according to one or more embodiments may include a cathode; an anode; and an electrolyte between the cathode and the anode. In one or more embodiments, the lithium battery may further include a separator. Such a lithium battery may provide excellent or suitable lifespan characteristics. The lithium battery may be, for example, lithium primary batteries, lithium metal batteries, lithium-sulfur batteries, lithium-air batteries, and/or the like, but without being limited thereto, any lithium battery available in the art may be used.

The lithium battery may be prepared by the method described herein as an example; however, the method of preparing the lithium battery is not limited to this method and may be adjusted according to conditions desired or required.

### Cathode

First, a cathode active material composition may be prepared by combining a cathode active material, a conductive material (e.g., an electron conductor), a binder, and a solvent. The prepared cathode active material composition may be directly coated onto, and then dried on an aluminum current collector to prepare a cathode plate including a cathode active material layer. In one or more embodiments, a film obtained by casting the cathode active material composition onto a separate support and then separating the composition from the support may be laminated on an aluminum current collector to form a cathode plate including a cathode active material layer.

As the cathode active material, a compound capable of reversible intercalation and deintercalation of lithium (lithiated intercalation compound) may be used. In one or more embodiments, one or more selected from among composite oxides of lithium with a metal selected from among cobalt, manganese, nickel, and/or a (e.g., any suitable) combination thereof may be utilized.

The composite oxide may be a lithium transition metal composite oxide, non-limiting examples thereof may include a lithium nickel-based oxide, a lithium cobalt-based oxide, a lithium manganese-based oxide, a lithium iron phosphate-based compound, a cobalt-free nickel-manganese-based oxide, and/or a (e.g., any suitable) combination thereof.

In one or more embodiments, a compound represented by any of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001 ≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂ (PO₄)₃ (0≤f≤2); and LiₐFePO₄ (0.90≤a≤1.8).

In the above formulas, A may be nickel (Ni), cobalt (Co), manganese (Mn), or a (e.g., any suitable) combination thereof; X may be aluminum (Al), Ni, Co, Mn, chromium (Cr), iron (Fe), magnesium (Mg), strontium (Sr), vanadium (V), a rare-earth element, or a (e.g., any suitable) combination thereof; D may be oxygen (O), fluorine (F), sulfur (S), phosphorous (P), or a (e.g., any suitable) combination thereof; G may be Al, Cr, Mn, Fe, Mg, lanthanum (La), cerium (Ce), Sr, V, or a (e.g., any suitable) combination thereof; and L¹ may be Mn, Al, or a (e.g., any suitable) combination thereof.

In one or more embodiments, the cathode active material may be a high-nickel cathode active material with a nickel content (e.g., amount) of 80 mol% or more, 85 mol% or more, 90 mol% or more, 91 mol% or more, or 94 mol% or more and 99 mol% or less, with respect to 100 mol% of all metals other than lithium in the high-nickel cathode active material. The high-nickel cathode active materials, due to their ability to realize high capacity, may be applied to a high-capacity, high-density lithium secondary battery.

In one or more embodiments, the cathode active material may be LiₐNiₓCo_{y}M_{z}O_{2-b}A_{b} (1.0≤a≤1.2, 0≤b≤0.2, 0.8≤x<1, 0<y≤0.3, 0<z≤0.3, and x+y+z=1, M may be manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a (e.g., any suitable) combination thereof, and A may be fluorine (F), sulfur (S), chlorine (Cl), bromine (Br), or a (e.g., any suitable) combination thereof), LiNiₓCo_{y}Mn_{z}O₂ (0.8≤x≤0.95, 0≤y≤0.2, 0<z≤0.2, and x+y+z=1), LiNiₓCo_{y}Al_{z}O₂ (0.8≤x≤0.95, 0≤y≤0.2, 0<z≤0.2, and x+y+z=1), LiNiₓCo_{y}Mn_{z}Al_{w}O₂ (0.8≤x≤0.95, 0≤y≤0.2, 0<z≤0.2, 0<w≤0.2, and x+y+z+w=1), LiₐCoₓM_{y}O_{2-b}A_{b} (1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a (e.g., any suitable) combination thereof, and A may be fluorine (F), sulfur (S), chlorine (Cl), bromine (Br), or a (e.g., any suitable) combination thereof), LiₐNiₓMn_{y}M'_{z}O_{2-b}A_{b} (1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a (e.g., any suitable) combination thereof, and A may be fluorine (F), sulfur (S), chlorine (Cl), bromine (Br), or a (e.g., any suitable) combination thereof), LiₐM1ₓM2_{y}PO_{4-b}X_{b} (wherein 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), zirconium (Zr), or a (e.g., any suitable) combination thereof, and M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a (e.g., any suitable) combination thereof, and X is O, F, S, P, or a (e.g., any suitable) combination thereof), or LiₐM3_{z}PO₄ (0.90≤a≤1.1 and 0.9≤z≤1.1, and M3 may be chromium (Cr), manganese (Mn), iron (Fe), cobalt (Co), nickel (Ni), copper (Cu), zirconium (Zr), or a (e.g., any suitable) combination thereof).

The conductive material may include: carbon black, graphite powder, natural graphite, artificial graphite, acetylene black, Ketjen black, and/or carbon fibers; carbon nanotubes; metal powder, metal fibers, or metal tubes, such as copper, nickel, aluminum, silver, and/or the like.; and/or conductive polymers such as polyphenylene derivatives and/or the like. However, the conductive material is not limited to the aforementioned examples and may be any material used as a conductive material (e.g., an electron conductor) in the art. In one or more embodiments, the cathode may not contain, for example, any conductive materials.

As the binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, and/or a styrene butadiene rubber polymer may be utilized, but embodiments of the present disclosure are not limited thereto, and any suitable binder in the art may be utilized. As the solvent, N-methylpyrrolidone (NMP), acetone, and/or water may be utilized, but embodiments of the present disclosure are not limited thereto, and any solvent available in the art may be utilized.

In one or more embodiments, the cathode for a lithium secondary battery may include a cathode current collector and a cathode active material layer formed on the cathode current collector. The cathode active material layer may include a cathode active material (e.g., in a form of particles) and may further include a binder and/or a conductive material (e.g., an electron conductor).

For example, in some embodiments, the cathode may further include an additive that can act as a sacrificial cathode.

An amount of the cathode active material may be about 90 wt% to about 99.5 wt% with respect to 100 wt% of a total weight of the cathode active material layer, and the amount of the binder and the conductive material may each independently be about 0.5 wt% to about 5 wt%, with respect to 100 wt% of the total weight of the cathode active material layer.

The binder may play a role to ensure that the cathode active material particles adhere to one another and the cathode active material adhere to the cathode current collectors. Examples of the binder may include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like.

The conductive material imparts conductivity to the electrode, and may be any electronically conductive material that does not cause a chemical change in a battery in which it is to be included. Non-limiting examples of the conductive material may include: carbon-based materials, such as natural graphite, artificial graphite, carbon black, acetylene black, Ketjen black, carbon fibers, carbon nanofibers, and/or carbon nanotubes; metal-based materials in the form of metal powder or metal fibers, containing copper, nickel, aluminum, silver, and/or the like; conductive polymers such as polyphenylene derivatives; and/or a (e.g., any suitable) mixture thereof.

The cathode current collector may utilize, for example, a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector may have a thickness of, for example, about 1 µm to about 100 µm, about 1 µm to about 50 µm, about 5 µm to about 25 µm, or about 10 µm to about 20 µm.

In one or more embodiments, the cathode current collector may include, for example, a base film, and a metal layer arranged on one side or both sides (e.g., opposite sides) of the base film. For example, in some embodiments, the base film may include a polymer. For example, in some embodiments, the polymer may be a thermoplastic polymer. For example, in one or more embodiments, the polymer may include polyethylene terephthalate (PET), polyethylene (PE), polypropylene (PP), polybutylene terephthalate (PBT), polyimide (PI), and/or a (e.g., any suitable) combination thereof. For example, in one or more embodiments, the base film may be an insulator. As the base film includes an insulating thermoplastic polymer, in the event of a short circuit, the base film is softened or liquefied, blocking the operation of the battery, to thereby prevent or reduce a rapid increase in electrical current. For example, in one or more embodiments, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. In the event of an overcurrent, the metal layer may be disconnected, thus acting as an electrochemical fuse to provide protection against short circuits. A limiting current and a maximum current may be controlled or selected through controlling the thickness of the metal layer. The metal layer may be plated or deposited on the base film. Because the limiting current and/or the maximum current of the cathode current collector decrease if the thickness of the metal layer decreases, the stability of the lithium battery during a short circuit may improve. In one or more embodiments, a lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, in some embodiments, the metal chip may be an aluminum foil, a copper foil, an SUS foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. The metal chip and/or the lead-tab may be further added on a part of the metal layer. For example, the base film may have a thickness of about 1 µm to about 50 µm, about 1.5 µm to about 50 µm, about 1.5 µm to about 40 µm, or about 1 µm to about 30 µm. With the base film having a thickness within the aforementioned ranges, the weight of the electrode assembly may be more effectively reduced. For example, in one or more embodiments, the base film may have a melting point of about 100 °C to about 300 °C, about 100 °C to about 250 °C or less, or about 100 °C to about 200 °C. Because the base film has a melting point within the aforementioned ranges, the base film may easily melt and be bonded to the lead-tab while welding the lead-tab. In some embodiments, to improve adhesion between the base film and the metal layer, a surface treatment such as corona treatment may be performed on the base film. For example, in one or more embodiments, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the aforementioned ranges, the electrode assembly may provide stability while maintaining conductivity. For example, in one or more embodiments, the metal chip may have a thickness of about 2 µm to about 10 µm, about 2 µm to about 7 µm, or about 4 µm to about 6 µm. With the metal chip having a thickness within the aforementioned ranges, the metal layer and the lead-tab may be more easily connected. If the cathode current collector has the above structure, the weight of the cathode may be reduced, and as a result, energy density of the cathode and the lithium battery may improve.

### Electrolyte

Next, an electrolyte may be prepared. The electrolyte may be, for example, a liquid electrolyte, a solid electrolyte, a gel electrolyte, or a (e.g., any suitable) combination thereof. In one or more embodiments, the electrolyte may be an organic electrolyte. For details of the liquid electrolyte, refer to the liquid electrolyte of the gel polymer electrolyte described above.

Non-limiting examples of the solid electrolyte may include an oxide-based solid electrolyte, a sulfide-based solid electrolyte, a polymer solid electrolyte, and/or a (e.g., any suitable) combination thereof.

### Anode

The anode may contain an anode current collector.

In one or more embodiments, the anode current collector 21 may include a base film, and a metal layer on one side or both (e.g., simultaneously) sides (e.g., opposite sides) of the base film. For example, in some embodiments, the base film may include a polymer. For example, in some embodiments, the polymer may be a thermoplastic polymer. For example, the polymer may include polyethylene terephthalate (PET), polyethylene (PE), polypropylene (PP), polybutylene terephthalate (PBT), polyimide (PI), and/or a (e.g., any suitable) combination thereof. In one or more embodiments, the polymer may be an insulating polymer. As the base film includes an insulating thermoplastic polymer, in the event of a short circuit, the base film is softened or liquefied, blocking the operation of the battery, to thereby prevent or reduce a rapid increase in electrical current. For example, in one or more embodiments, the metal layer may include copper (Cu), stainless steel, titanium (Ti), iron (Fe), cobalt (Co), nickel (Ni), or an alloy thereof. In some embodiments, the metal layer may correspond to, for example, a first metal substrate. In some embodiments, the metal layer may further include a coating layer including a second metal. In one or more embodiments, the anode current collector 21 may further include a metal chip and/or a lead-tab. For more detailed descriptions of the base film, the metal layer, the metal chip, and the lead-tab of the anode current collector 21, refer to the cathode current collector. Because the anode current collector 21 has the above structure, the weight of the anode may be reduced, and as a result, energy density of the anode and the lithium battery may improve.

In one or more embodiments, an anode active material layer may be formed on the anode current collector. The anode active material layer may be formed as a lithium plated layer after charged. In one or more embodiments, the anode active material layer may be formed using an anode active material during battery assembly.

The method of forming an anode active material layer by using an anode active material may be substantially the same process as the process of forming a cathode active material layer, except that an anode active material is used in place of a cathode active material.

In one or more embodiments, the lithium battery may further include, for example, a thin film containing an element capable of forming an alloy with lithium, on a (e.g., one) side of the anode current collector. The thin film may be arranged between the anode current collector and the anode active material layer. The thin film may include, for example, an element capable of forming an alloy with lithium. Examples of the element capable of forming an alloy with lithium may include gold, silver, zinc, tin, indium, silicon, aluminum, bismuth, and/or the like, but without being limited thereto, any element available in the art that is capable of forming an alloy with lithium may be utilized. The thin film may be composed of one of the aforementioned metals or may be composed of an alloy of one or more suitable kinds of metals. With the thin film arranged on one side of the anode current collector, the plated form of a first anode active material layer being plated between the thin film and the anode active material layer may be further flattened, and the cycling performance of the lithium battery may further improve.

### Electrolyte Layer

The electrolyte layer may contain the gel polymer electrolyte and further include a separator.

The separator may be any separator commonly used in a lithium battery.

For the separator, a multilayer film of two or more layers of polyethylene, polypropylene, or polyvinylidene fluoride may be utilized, or a mixed-multilayer film may also be used, such as a double-layer separator of polyethylene/polypropylene, a triple-layer separator of polyethylene/polypropylene/polyethylene, or a triple-layer separator of polypropylene/polyethylene/polypropylene.

In one or more embodiments, the separator may include a porous substrate and a coating layer located on one side or both (e.g., simultaneously) sides (e.g., opposite sides) of the porous substrate, which contains an organic material, an inorganic material, and/or a (e.g., any suitable) combination thereof.

The porous substrate may be a porous film, the porous film may be a woven fabric or a nonwoven fabric, and
The porous substrate may include an olefin-based resin, a fluorine-based resin, an ester-based resin, an imide-based resin, an acryl-based resin, a cellulose-based resin, and/or a (e.g., any suitable) combination thereof, wherein the olefin-based resin includes polyethylene, polypropylene, and/or a (e.g., any suitable) combination thereof.

The fluorine-based resin may include polyvinylidene fluoride, polytetrafluoroethylene, and/or a (e.g., any suitable) combination thereof. The ester-based resin may include polyethylene terephthalate, polybutylene terephthalate, and/or a (e.g., any suitable) combination thereof. The imide-based resin may include polyamide-imide, polyetherimide, and/or a (e.g., any suitable) combination thereof. The acryl-based resin may include polyacrylonitrile, polyacrylate, and/or a (e.g., any suitable) combination thereof. The cellulose-based resin may include carboxymethylcellulose, microbial or bacterial cellulose, plant-based cellulose, animal-based cellulose, and/or a (e.g., any suitable) combination thereof.

In one or more embodiments, the porous substrate may be a polymer film formed of any one polymer selected from among: polyolefins such as polyethylene and polypropylene; polyesters such as polyethylene terephthalate and polybutylene terephthalate; and polyacetal, polyamide, polyimide, polycarbonate, polyether ketone, polyaryl ether ketone, polyetherimide, polyamide-imide, polybenzimidazole, polyethersulfone, polyphenylene oxide, cyclic olefin copolymers, polyphenylene sulfide, polyethylene naphthalate, glass fibers, and polytetrafluoroethylene (e.g., Teflon). In one or more embodiments, the porous substrate may be a polymer film formed of a copolymer and/or a (e.g., any suitable)mixture of two or more of the aforementioned polymers.

The organic material may include a polyvinylidene fluoride-based polymer or a (meth)acryl-based polymer.

The inorganic material may include, but is not limited to, inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof.

In one or more embodiments, the organic material and the inorganic material may be present together in a mixed state in one coating layer, or one coating layer including the organic material, and another coating layer including the inorganic material may be present in a laminated form.

The lithium battery according to one or more embodiments may further include a solid electrolyte. The solid electrolyte may be, for example, an oxide-based solid electrolyte, a sulfide-based solid electrolyte, and/or a (e.g., any suitable) combination thereof.

In one or more embodiments, The solid electrolyte may be, for example, an oxide-based solid electrolyte. The oxide-based solid electrolyte may be one or more selected from among Li_{1+x+y}AlₓTi₂₋ₓSi_{y}P_{3-y}O₁₂ (0<x<2, 0≤y<3), Li₃PO₄, LiₓTi_{y}(PO₄)₃ (0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂ (0≤x≤1, 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (M = Te, Nb, or Zr, and x is an integer of 1 to 10). The solid electrolyte may be produced by methods such as a sintering method. For example, the oxide-based solid electrolyte may be a garnet-type or kind solid electrolyte selected from among Li₇La₃Zr₂O₁₂ (LLZO) and Li₃₊ₓLa₃Zr₂₋ₐMₐO₁₂ (M-doped LLZO, M=Ga, W, Nb, Ta, or Al, and x is an integer of 1 to 10).

Examples of the sulfide-based solid electrolyte may include lithium sulfide, silicon sulfide, phosphorus sulfide, boron sulfide, and/or a (e.g., any suitable) combination thereof. Sulfide-based solid-state electrolyte in the form of particles may include Li₂S, P₂S₅, SiS₂, GeS₂, B₂S₃, and/or a (e.g., any suitable) combination thereof. In some embodiments, the sulfide-based solid-state electrolyte particles may be Li₂S or P₂S₅ The sulfide-based solid electrolyte particles are suitable to have a higher lithium-ion conductivity than other inorganic compounds. For example, in some embodiments, the sulfide-based solid electrolyte may include Li₂S and P₂S₅. If sulfide solid electrolyte materials constituting the sulfide-based solid electrolyte include Li₂S-P₂S₅, a mixing molar ratio of Li₂S to P₂S₅ may be, for example, in a range of about 50:50 to about 90:10. For example, a material such as Li₃PO₄, a halogen, a halogen compound, Li₂₊₂ₓZn₁₋ₓGeO₄ ("LISICON", 0≤x<1 ), Li_{3+y}PO₄₋ₓNₓ ("LIPON", 0<x<4 and 0<y<3), Li_{3.25}Ge_{0.25}P_{0.75}S₄ ("Thio-LISICON"), and/or Li₂O-Al₂O₃-TiO₂-P₂O₅ ("LATP") may be added to an inorganic solid electrolyte such as Li₂S-P₂S₅, SiS₂, GeS₂, B₂S₃, and/or a (e.g., any suitable) combination thereof, to prepare an inorganic solid electrolyte, and this inorganic solid electrolyte may be used as a sulfide solid electrolyte. Non-limiting examples of the sulfide solid electrolyte materials may include Li₂S-P₂S₅; Li₂S-P₂S₅-LiX (X=a halogen element); Li₂S-P₂S₅-Li₂O; Li₂S-P₂S₅-Li₂O-Lil; Li₂S-SiS₂; Li₂S-SiS₂-Lil; Li₂S-SiS₂-LiBr; Li₂S-SiS₂-LiCl; Li₂S-SiS₂-B₂S₃-Lil; Li₂S-SiS₂-P₂S₅-Lil; Li₂S-B₂S₃; Li₂S - P₂S₅-ZₘSₙ (0<m<10, 0<n<10, Z=Ge, Zn or Ga); Li₂S-GeS₂; Li₂S-SiS₂-Li₃PO₄; and Li₂S-SiS₂-LiₚMO_{q} (0<p<10, 0<q<10, M=P, Si, Ge, B, Al, Ga or In). In this regard, the sulfide-based solid electrolyte material may be prepared by subjecting starting material(s) (e.g., Li₂S, P₂S₅, and/or the like.) of the sulfide-based solid electrolyte material to a treatment, such as melt quenching, mechanical milling, and/or the like. In addition, a calcination process may be performed following the above treatment. The sulfide-based solid electrolyte may be amorphous or crystalline, or may be in a mixed state between amorphous and crystalline.

### Lithium Battery

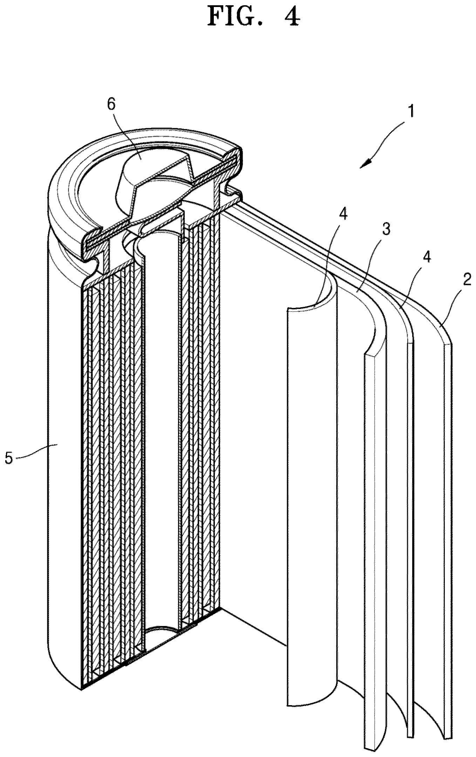

Referring to FIGs. 4-6, a lithium battery 1 according to one or more embodiments may include a cathode 3, an anode 2, and a separator 4. The separator may be contained in the electrolyte layer according to one or more embodiments.

A gel-type or kind polymer electrolyte (e.g., the gel polymer electrolyte of the present disclosure) may be arranged on at least one side of the separator, or the gel polymer electrolyte may be contained inside the separator.

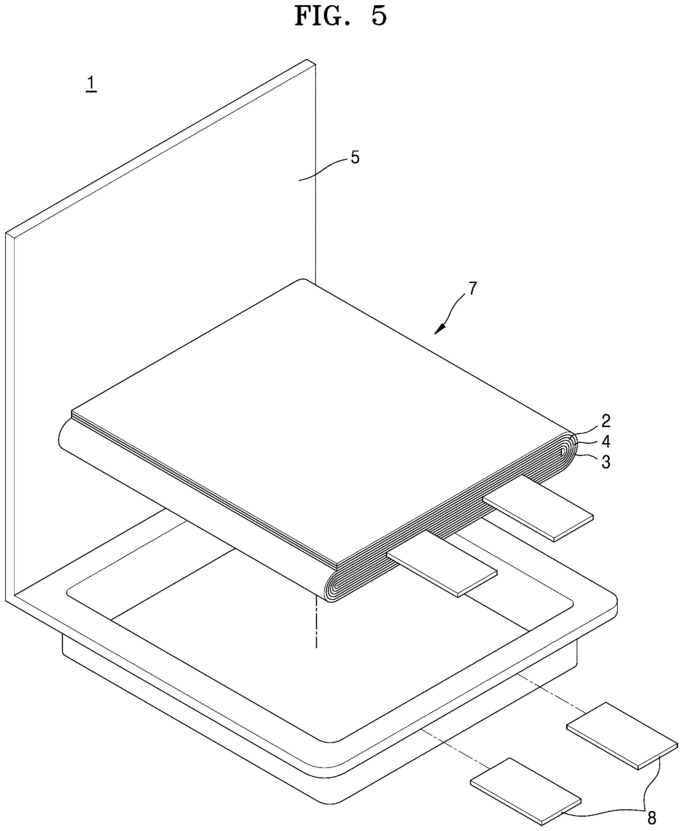

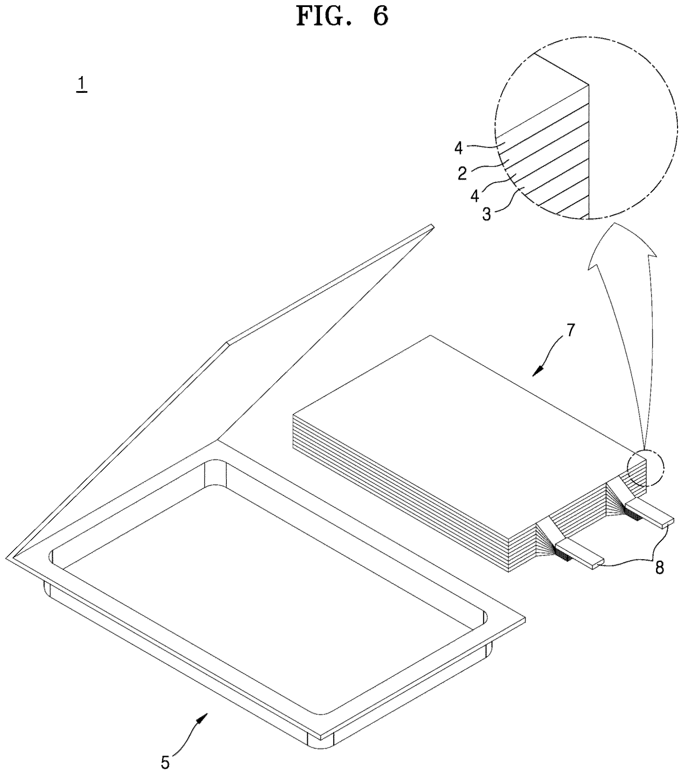

In one or more embodiments, the gel-type or kind polymer electrolyte may be arranged between an electrolyte and the cathode. In some embodiments, as shown in FIG. 5 and FIG. 6, the cathode 3, the anode 2, and the separator 4 may be wound or folded to form a battery structure 7. The battery structure 7 may be accommodated in the battery case 5. The battery case 5 may be injected with an organic electrolyte, and, in some embodiments, as shown in FIG. 4, may then be sealed with a cap assembly 6, thereby completing the preparation of the lithium battery 1. The battery case 5 may be a cylindrical type or kind, but without being necessarily limited thereto, or may be a prismatic type or kind, a thin-film type or kind, and/or the like. As shown in FIGs. 5 and 6, in one or more embodiments, the lithium battery 1 may include an electrode tab 8, which may include a positive electrode tab and a negative electrode tab, serving as an electrical path for inducing the current formed in the electrode assembly 7 to the outside.

The separator 4 may be arranged between the cathode 3 and the anode 2, thereby forming a battery structure. The gel-type or kind polymer electrolyte between the separator and the cathode is not shown.

A pouch-type or kind lithium battery corresponds to a lithium battery separately shown in FIGs. 5 and 6 using a pouch as a battery case. The pouch-type or kind lithium battery may include one or more battery structures. An electrolyte, or an electrolyte and a separator may be arranged between a cathode and an anode to form a battery structure. The battery structures may be stacked in a bi-cell structure, and immersed in a liquid electrolyte, and then accommodated and sealed in a pouch, thereby completing the preparation of a pouch-type or kind lithium battery. For example, in one or more embodiments, the cathode, the anode, and the separator described above may be simply stacked in the form of an electrode assembly and then accommodated in a pouch, or may be wound or folded into a jelly roll-type or kind electrode assembly and then accommodated in a pouch. Subsequently, the pouch may be injected with an organic electrolyte and then sealed, thereby completing the preparation of a lithium battery.

The lithium battery of the present disclosure due to having excellent or suitable discharge capacity and lifespan characteristics, and high energy density, may be utilized in, for example, an electric vehicle (EV). For example, the lithium battery may be used in a hybrid vehicle, such as a plug-in hybrid electric vehicle (PHEV) and/or the like. Also, the lithium battery may be used in any field that requires a large amount of energy storage. For example, the lithium battery may be used in an electric bicycle, a power tool, a power wall, and/or the like.

Multiple units of the lithium battery may be stacked together to form a battery module, and multiple units of the battery module may form a battery pack. Such a battery pack may be utilized in any types (kinds) of devices in which high capacity and high output are desired or required. For example, the battery pack may be used in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. In one or more embodiments, the battery module and/or the battery pack may further include a cooling device. A plurality of battery packs may be controlled or selected by a battery management system. The battery management system may include a battery pack, and a battery control device connected to the battery pack.

### Method of Preparing Lithium Battery

A lithium battery according to one or more embodiments may be prepared through: preparing an anode current collector; preparing a separator; preparing a cathode; preparing a battery assembly by stacking the anode current collector, the separator, and the cathode; injecting the battery assembly with a gel polymer electrolyte-forming composition including a liquid electrolyte and a gel polymer forming crosslinkable monomer; and forming a gel polymer electrolyte by performing crosslinking.

In one or more embodiments, the gel polymer electrolyte-forming composition may include a first polymerizable monomer and a second polymerizable monomer, and in the gel polymer electrolyte-forming composition, a total amount of the first polymerizable monomer and the second polymerizable monomer may be, for example, about 0.1 wt% to about 10 wt%, about 0.2 wt% to about 8 wt%, about 0.5 wt% to about 6 wt%, about 1 wt% to about 5 wt%, or about 2 wt% to about 4 wt%, with respect to the total weight of the gel polymer electrolyte-forming composition. If the total amount of the first and second polymerizable monomers in the gel polymer electrolyte-forming composition is within the aforementioned ranges, a stable gel polymer electrolyte may be formed.

In the lithium battery according to one or more embodiments, a separator containing the gel polymer electrolyte may be formed in-situ by injecting a battery assembly with a gel polymer electrolyte-forming composition and performing heat treatment thereon. According to one or more embodiments, a separator containing the gel polymer electrolyte may be prepared separately to form a free-standing film, and the free-standing film may be arranged on an anode current collector, and then a cathode may be arranged thereon to thereby produce the lithium battery.

The polymerizable monomer included in the gel polymer electrolyte-forming composition may be i) a polyfunctional acryl-based monomer having 3 or more polymerizable functional groups; or ii) a first polymerizable monomer and a second polymerizable monomer, wherein the first polymerizable monomer is a polyfunctional acryl-based monomer having 3 or more polymerizable functional groups, and the second polymerizable monomer is one or more selected from among a urethane acryl-based monomer having two or more polymerizable functional groups, and a polymerizable monomer having two or more polymerizable functional groups and containing a perfluoropolyether (PFPE) unit, wherein the liquid electrolyte may include a lithium salt, an organic solvent, and butyronitrile, and the lithium salt may include lithium difluoro(oxalato)borate (LiDFOB) and lithium tetrafluoroborate (LiBF₄).

The method of crosslinking the gel polymer electrolyte-forming composition is not limited. For example, the gel polymer electrolyte-forming composition may be crosslinked by heat, ultraviolet rays, and/or the like. For production efficiency, in one or more embodiments, the thermal crosslinking by heat treatment may be used. The gel polymer electrolyte-forming composition may include, for example, a thermal initiator. Examples of the thermal initiator may include t-amyl peroxide, azobis-based initiators, and/or the like, but without being limited thereto, any suitable thermal initiator available in the art may be utilized. An amount of the thermal initiator may be 0.1 wt% or less or 0.05 wt% or less, with respect to the total weight of the gel polymer electrolyte-forming composition. The crosslinked product of the gel polymer electrolyte-forming composition may be, for example, a product of a heat treatment performed at about 60 °C to about 90 °C, for about 1 hour to about 3 hours. The heat treatment conditions may be adjusted depending on the type or kind of the thermal initiator used.

In one or more embodiments, the separator may contain a gel-type or kind polymer electrolyte (e.g., the gel polymer electrolyte of the present disclosure). In one or more embodiments, the separator may further contain a liquid electrolyte.

In one or more embodiments, forming of a protective layer on the anode current collector may be further included.

The forming of a protective layer on the anode current collector may be carried out by applying a protective layer-forming composition onto the anode current collector and performing heat treatment thereon, wherein the protective layer-forming composition contains boron nitride and one or more selected from among binder precursors and binders. Examples of the binder precursor may include a first polymer and a second polymer, and the binder may refer to the binders described with respect to the protective layer above.

A solvent, such as N-methylpyrrolidone and/or dimethylformamide, may be added to the protective layer-forming composition. An amount of the solvent may be about 0.05 parts by weight to about 5 parts by weight with respect to 100 parts by weight of the total weight of the boron nitride and the binder.

In one or more embodiments, the protective layer may further include a lithium salt. an amount of the lithium salt may be about 30 parts by weight to about 80 parts by weight, about 40 parts by weight to about 60 parts by weight, or about 45 parts by weight to about 55 parts by weight, with respect to 100 parts by weight of the total weight of the binder and the lithium salt.

In one or more embodiments, the protective layer-forming composition may further include a second polymer having a functional group that is crosslinkable with the first polymer containing hydroxyl groups. A protective layer formed from the aforementioned protective layer-forming composition may further include a crosslinked polymer of the first polymer and the second polymer. In one or more embodiments, a mixing weight ratio of the first polymer containing hydroxyl groups to the second polymer may be adjusted to be within a range of about 50:50 to about 99:1, about 50:50 to about 99:1, or about 60:40 to about 90:10.

The second polymer may be one or more selected from among a fluorine-containing polyimide having a carboxyl group and a fluorine-containing polyamic acid having a carboxyl group.

If the second polymer is a fluorine-containing polyamic acid having a carboxyl group, a protective layer-forming composition containing the same may be coated onto the anode current collector and dried, and a heat treatment may then be further carried out to perform a crosslinking reaction of the first polymer and the second polymer, to thereby form a protective layer containing a crosslinked polymer. The heat treatment, although it may vary depending on the compositions of the first polymer and the second polymer, may be carried out, for example, at a temperature of about 80 °C to about 200 °C, about 100 °C to about 200 °C, about 150 °C to 200 °C, or about 150 °C to about 190 °C. If the heat treatment temperature is within the aforementioned range, the protective layer formed on an electrode surface may minimize or reduce the exposure of the electrolyte on the electrode surface and create a substantially uniform flow of lithium ions throughout the entire electrode, and thereby effectively suppress or reduce the growth of lithium dendrites.

The present disclosure will be described in greater detail through the following examples and comparative examples. However, it will be understood that the examples are provided only to illustrate the present disclosure and not to be construed as limiting the scope of the present disclosure.

### Preparation of Protective Layer-Forming Polymer Solution

### Preparation Example 1: Preparation of Polymer Solution Containing Polyvinyl Alcohol and Fluorinated Polyamic Acid of Formula 18

The polyvinyl alcohol was purchased from Sigma-Aldrich. The synthesis process of the fluorinated polyamic acid of Formula 18 was as follows.

First, in a round-bottomed flask flushed with nitrogen gas, 4.9411g (0.00154 mol) of 2,2'-bis(trifluoromethyl)benzidine (TFDB) and 0.7825g (0.00051 mol) of diaminobenzoic acid (DABA) were added, and completely dissolved in 131 g of N-methylpyrrolidone (NMP) by using a mechanical agitator. Then, 9.2764 g (0.0209 mol) of 4,4'-(hexafluoroisopropylidene) (6FDA) was added thereto and agitated for 24 hours at room temperature (25 °C) to produce a polyamic acid represented by Formula 17. The polyamic acid is a random copolymer. The molar ratio of 6FDA:TFDB:DABA was 4:3:1.

The molar ratio of n:m in Formula 17 was 1:3.

To the polyamic acid represented by Formula 17 (6FDA:TFDB:DABA, acid equivalents of 210 g/eq), 10 g of an aqueous LiOH solution, which corresponds to 0.5 equivalents of carboxylic acid, was added to thereby produce a water-soluble polyamic acid represented by Formula 18, in which 0.5 equivalents of COOH in the COOH groups in the polyamic acid were substituted with COO-Li+.

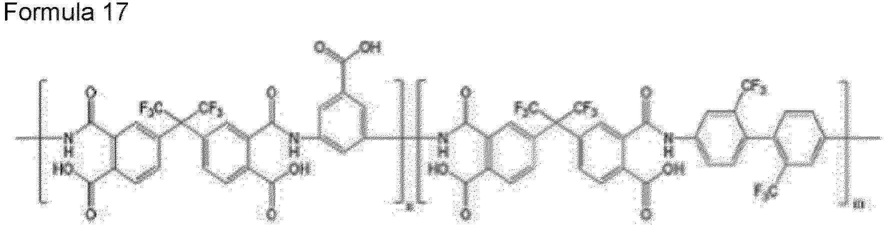

In Formula 17, n is 0.25 and m is 0.75.

The water-soluble polyamic acid represented by Formula 18 and a polyvinyl alcohol (weight average molecular weight, Mw=89,000, hydrolysis + 99 %) were mixed in a weight ratio of 20:80 to produce a polymer solution with a solid content (e.g., amount) of 10 wt%.

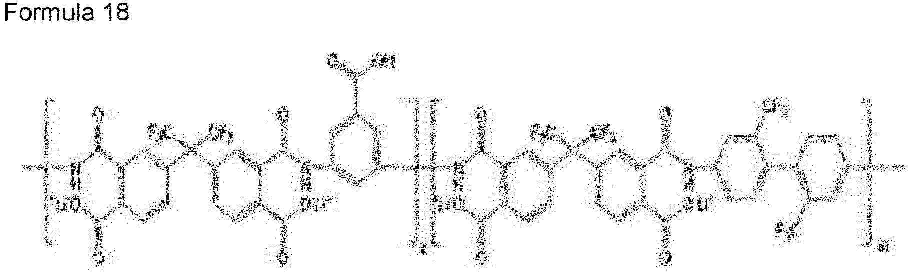

In Formula 18, n is 0.25 and m is 0.75.

### Preparation Example 2: Preparation of compound DRIC of Formula 1-1

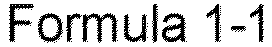

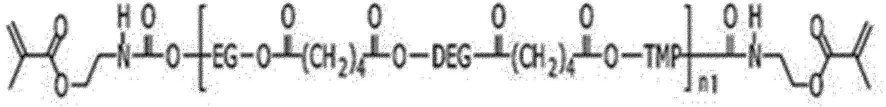

In Formula 1-1, EG denotes an ethylene glycol residue, DEG denotes a diethylene glycol residue, TMP denotes a trimethylolpropane residue, and n1 is 10. 150.6 g of adipic acid (AA), 115.14 g of diethylene glycol (DG), 81.05 g of ethylene glycol (EG), and 21.32 g of trimethylolpropane (TMP) were put into a reactor at room temperature (25 °C), and a temperature was raised to 220 °C. Titanium isopropoxide (TIP) was put into the reactor. After reaching full vacuum, such a mixture was subjected to a primary reaction at a temperature of 220 °C for 10 hours to obtain polyester polyol. The polyester polyol was primarily cooled to a temperature of 130 °C, vacuum-treated at a temperature of 130 °C for 2 hours, and then secondarily cooled to a temperature of 75 °C. 18.24 g of isocyanato ethyl methacrylate (ICEMA), 0.54 g of monomethyl ether hydroquinone (MEHQ), 0.566 g of butylated hydroxy toluene (BHT), and 0.526 g of dibutyl-tin-dilaurate (DBTDL) were added to the polyester polyol (Polyol) and subjected to a secondary reaction to obtain the compound DRIC of Formula 1-1.

### Preparation of Gel Polymer Electrolyte and Lithium Battery

### Example 1: Anode Current Collector/ /Separator + GPE (Gel polymer (DPHA/AD1700(3/1) 4 %) + LE, LE (Butyronitrile+ LiDFOB + LiBF₄)/Cathode

A 10 µm-thick copper foil was prepared as an anode current collector.

A 20 µm-thick single polyethylene film as a separator was stacked on top of the copper foil, and a cathode was stacked on the other side of the separator to thereby produce a laminate. The prepared laminate was injected with a gel polymer electrolyte-forming composition and subjected to heat treatment at 70 °C for 120 minutes, to prepare a lithium battery with a gel polymer electrolyte formed in the pores of the separator. The lithium battery had the structure of cathode/gel polymer electrolyte (separator)/anode current collector. In the gel polymer electrolyte, with respect to 100 parts by weight of the gel polymer electrolyte, the amount of the gel polymer was 4 parts by weight, and the amount of the liquid electrolyte was 96 parts by weight.

The gel polymer electrolyte-forming composition was prepared by mixing the following components together: hexafunctional crosslinker dipentaerythritol hexaacrylate (DPHA) as a crosslinkable monomer; Fluorolink AD1700 by Solvay (MW: 1,500); a liquid electrolyte, and benzoin ethyl ether (Sigma-Aldrich, 240.30 g/mol) as an initiator. In the gel polymer electrolyte-forming composition, the total amount of crosslinkable monomers was 4 wt% with respect to the total weight of the gel polymer electrolyte-forming composition, and the mixing weight ratio of DPHA to AD1700 was 3:1. AD1700 is a solution prepared by mixing perfluoropolyether-urethane acrylate of Formula with a mixtures of ethyl acetate and butyl acetate (mixed in a weight ratio of 1:1).

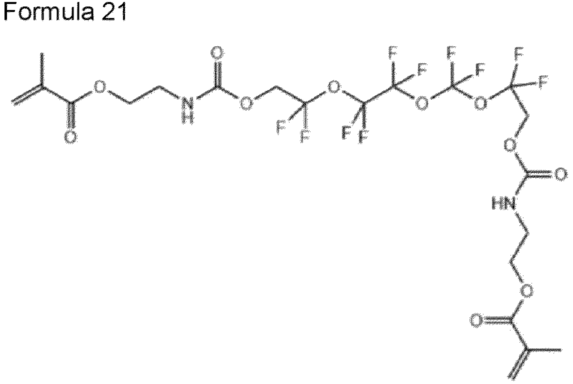

### AD1700

A mixture formed by adding 0.6 M LiBF₄ and 0.6 M lithium difluoro(oxalate)borate (LiDFOB) to a mixed solvent containing diethyl carbonate (DEC) and fluoroethylene carbonate (FEC) in a volume ratio of 2:1 was used as the liquid electrolyte. In the liquid electrolyte, the amount of butyronitrile was 8.74 wt% with respect to the total weight of the liquid electrolyte, and the amount of FEC was 36.7 wt% with respect to the total weight of the liquid electrolyte.

The gel polymer electrolyte-forming composition contained, with respect to 100 parts by weight of the total weight of the gel polymer electrolyte-forming composition, 4 parts by weight of the crosslinkable monomer, DPHA, 96 parts by weight of the liquid electrolyte, and an initiator. The initiator was used in an amount of 5 parts by weight with respect to 100 parts by weight of the crosslinkable monomer.

The cathode was prepared as follows.

Li_{1.04}Ni_{0.88}Co_{0.1}Al_{0.02}O₂ powder as a cathode active material and carbon conductive material (Super-P; Timcal Ltd.) were uniformly (e.g., substantially uniformly) mixed in a weight ratio of 90:5 to form a mixture, and a polyvinylidene fluoride (PVDF) binder solution was then added to the mixture to prepare a cathode active material slurry in which the weight ratio of cathode active material: carbon conductive material: binder is 90:5:5.

The prepared cathode active material slurry was coated onto a 15 µm-thick aluminum substrate by using a doctor blade, and dried under reduced pressure at 120 °C, and then rolled into a sheet by a roll press to prepare a cathode.

In the lithium battery prepared by the aforementioned process, a lithium plated layer was formed between the anode current collector and the separator.

### Example 2: Anode Current Collector/Separator + GPE (Gel polymer (DPHA/DRIC(3/1) 4 %) + LE, LE (Butyronitrile+ LiDFOB + LiBF₄)/Cathode

A gel polymer electrolyte and a lithium battery were prepared following substantially the same process as Example 1, except that DPHA and DRIC of Formula 1-1 were used instead of the hexafunctional crosslinker dipentaerythritol hexaacrylate (DPHA) as the crosslinkable monomer, and Fluorolink AD1700 by Solvay (MW: 1,500) as the crosslinkable monomer for the preparation of the gel polymer electrolyte-forming composition. The mixing weight ratio of DPHA to DRIC was 3:1.

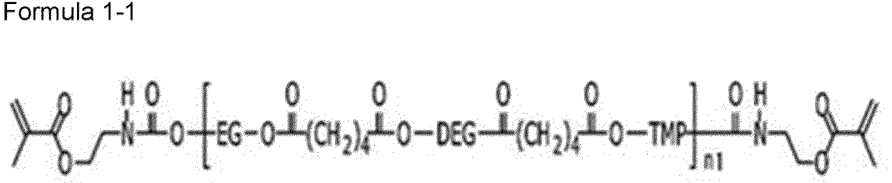

In Formula 1-1, EG denotes an ethylene glycol residue, DEG denotes a diethylene glycol residue, TMP denotes a trimethylolpropane residue, and n1 is 10.

### Example 3: GPE (Gel polymer (DPHA/AD1700(1/1) 4 %) + LE, LE (Butyronitrile+ LiDFOB + LiBF₄)

A gel polymer electrolyte and a lithium battery were prepared following substantially the same process as Example 1, except that the mixing weight ratio of DPHA to AD1700 for the preparation of the gel polymer electrolyte-forming composition was changed to 1:1.

### Example 4: GPE (Gel polymer (DPHA/DRIC(1/1) 4 %) + LE, LE (Butyronitrile+ LiDFOB + LiBF₄)

A gel polymer electrolyte and a lithium battery were prepared following substantially the same process as Example 2, except that the mixing weight ratio of DPHA to DRIC for the preparation of the gel polymer electrolyte-forming composition was changed to 1:1.

### Example 5: GPE (Gel polymer (DPHA/AD1700(3/1) 10 %) + LE, LE (Butyronitrile+ LiDFOB + LiBF₄)

A gel polymer electrolyte and a lithium battery were prepared following substantially the same process as Example 1, except that the total amount of DPHA and AD1700 was changed to 10 wt% with respect to the total weight of the gel polymer electrolyte-forming composition for the preparation of the gel polymer electrolyte-forming composition.

### Example 6: GPE (Gel polymer (TMPTMA/AD1700(3/1) 4 %) + LE, LE (Butyronitrile+ LiDFOB + LiBF₄)

A gel polymer electrolyte and a lithium battery were prepared following substantially the same process as Example 1, except that trimethylolpropane trimethacrylate (TMPTMA) was used instead of DPHA for the preparation of the gel polymer electrolyte-forming composition.

### Example 7

A gel polymer electrolyte and a lithium battery were prepared following substantially the same process as Example 1, except that a protective layer, prepared by the process described below, was additionally formed on the anode current collector, and a separator was placed on top of the protective layer.

The water-soluble polyamic acid prepared in Preparation Example 1, which is represented by Formula 18, and polyvinyl alcohol (weight average molecular weight Mw=78,000, 88 % degree of saponification, Polysciences, 15132) were mixed together in a weight ratio of 20:80 to produce a polymer solution with a solid content (e.g., amount) of 10 wt%. The polymer solution was then mixed with hexagonal boron nitride (average particle diameter: 100 nm, spherical particles) and lithium salt LiPF₆, and was further mixed with NMP as a solvent to prepare a protective layer-forming composition. The amounts of the polymers, boron nitride (BN), and lithium salt in the polymer solution were controlled or selected such that the mixing weight ratio of (PVA/PIF) : BN : lithium salt in the protective layer become 50:0.5:50. Further, the amount of the solvent was 900 parts by weight with respect to 100 parts by weight of the polymers.

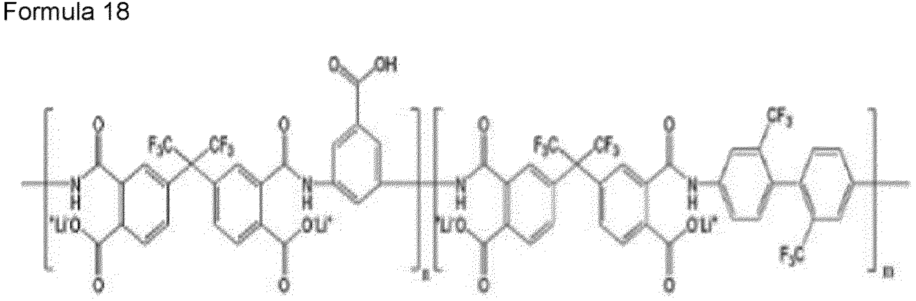

In Formula 18, n is 0.25 and m is 0.75.

The protective layer-forming composition was coated onto a 10 µm-thick copper foil serving as an anode current collector, and was dried for 30 minutes in a vacuum oven at 80 °C, and then subjected to a heat treatment at 180 °C for 30 minutes, to prepare an anode.

As the heat treatment causes the carboxyl groups in the fluorine-substituted polyamic acid to react with the hydroxyl groups in the polyvinyl alcohol to form ester linkers, a crosslinked polymer of the fluorine-substituted polyamic acid and the polyvinyl alcohol was produced. The crosslinked polymer had a three-dimensional network structure in which the fluorine-substituted polyimide (PIF) of Formula 20 and the polyvinyl alcohol are crosslinked at multiple points.

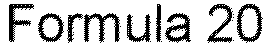

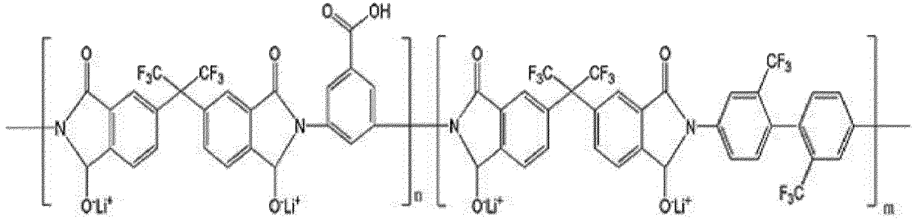

In Formula 20, n may be 0.25, m may be 0.75, and the weight average molecular weight of the polyimide of Formula 20 may be about 2,000,000.

### Comparative Example 1: Anode Current Collector/Separator + GPE (Gel Polymer (DPHA/AD1700 (3/1) 4 %) + LE (LiDFOB + LiBF₄, Butyronitrile-free)/Cathode

A gel polymer electrolyte and a lithium battery were prepared following substantially the same process as Example 1, except that butyronitrile was not used when preparing the liquid electrolyte for the gel polymer electrolyte-forming composition.

### Comparative Example 2: Anode Current Collector/Separator + GPE (Gel Polymer (DPHA) 4 %) + LE (LiDFOB + LiBF₄, Butyronitrile-free)/Cathode

A gel polymer electrolyte and a lithium battery were prepared following substantially the same process as Example 1, except that as the crosslinkable monomer, DPHA was used alone, instead of DPHA and AD1700 together, and butyronitrile was not used, when preparing the gel polymer electrolyte-forming composition.

### Comparative Example 3: Anode Current Collector/Separator + GPE (Gel Polymer (Bifunctional Monomer (PEO-DMA) + AD1700 3:1) 4 %)+ LE (LiDFOB + LiBF₄, Butyronitrile-free)/Cathode

A gel polymer electrolyte and a lithium battery were prepared following substantially the same process as Example 1, except that PEO-DMA and AD1700 were used as the crosslinkable monomers, instead of DPHA and AD1700, and butyronitrile was not used, when preparing the gel polymer electrolyte-forming composition. PEO-DMA is polyethylene glycol) dimethacrylate disclosed in Example 2Cof WO2017/153310A.

### Evaluation Example 1: High-temperature (45 °C) Lifespan

The lithium batteries of Examples 1 to 4, 6, and 7 and Comparative Examples 1 and 2 were each evaluated for their charge-discharge characteristics under the following conditions.

The lithium batteries were each charged at a constant current of 0.1 C rate at 45 °C until the battery voltage reached 4.3 V (vs. Li) and then, while maintaining 4.3 V in a constant voltage mode, the charging was cut-off at a current of 0.05 C rate. Subsequently, each battery was discharged at a constant current of 0.1 C rate until the battery voltage reached 3.6 V (vs. Li) during discharge (formation cycle).

The lithium batteries after the formation cycle were each charged at a constant current of 0.2 C rate at 45 °C until the battery voltage reached 4.3 V (vs. Li) and then, while maintaining 4.3 V in a constant voltage mode, the charging was cut-off at a current of 0.05 C rate. Subsequently, each battery was discharged at a constant current of 0.5 C rate until the battery voltage reached 3.6 V (vs. Li) during discharge (1^{st} cycle). This cycle was repeated under the same conditions up to the 160^{th} cycle.

Throughout the charge-discharge cycles above, a rest period of 10 minutes was provided after each charge/discharge cycle. A part of the high-temperature charge-discharge test results is shown in Table 1.

In Table 1, cycle number refers to the number of cycles desired or required for the discharge capacity to decrease down to 80 % of the standard capacity after the second cycle.

**Table 1**

| Item | Conditions | Cycle number(n) @ 80 % |
|---|---|---|
| Example 1 | GPE (Gel polymer (DPHA/AD1700(3/1) 4 %) + LE, LE (Butyronitrile+ LiDFOB + LiBF₄) | 223 |
| Example 2 | GPE (Gel polymer (DPHA/DRIC(3/1) 4 %) + LE, LE (Butyronitrile+ LiDFOB + LiBF₄) | 231 |
| Example 3 | GPE (Gel polymer (DPHA/AD1700(1/1) 4 %) + LE, LE (Butyronitrile+ LiDFOB + LiBF₄) | 215 |
| Example 4 | GPE (Gel polymer (DPHA/DRIC(1/1) 4%) + LE, LE (Butyronitrile+ LiDFOB + LiBF₄) | 211 |
| Example 6 | GPE (Gel polymer (TMPTMA/AD1700(3/1) 4 %) + LE, LE (Butyronitrile+ LiDFOB + LiBF₄) | 203 |
| Example 7 | Example 1 with protective layer | 225 |
| Comparat ive Example 1 | GPE (Gel polymer (DPHA/AD1700(3/1) 4 %)+ LE (LiDFOB + LiBF₄, Butyronitrile-free) | 186 |
| Comparat ive Example 2 | GPE (Gel polymer (DPHA) 4 %)+ LE (LiDFOB + LiBF₄, Butyronitrile-free) | 174 |

As can be seen in Table 1, the lithium batteries of Examples 1 to 4, 6, and 7 each show improved lifespan characteristics, compared to the lithium batteries of Comparative Examples 1 and 2.

### Evaluation Example 2: High-Rate Capability

The lithium batteries prepared in Examples 1 to 7 and Comparative Examples 1 to 3 were each charged at a constant current of 0.1 C rate at 25 °C until the battery voltage reached 4.3 V (vs. Li) and then, while maintaining 4.3 V in a constant voltage mode, the charging was cut-off at a current of 0.05 C rate. Subsequently, each battery was discharged at a constant current of 0.1 C rate until the battery voltage reached 3.6 V (vs. Li) during discharge (formation cycle).

The lithium batteries after the formation cycle were each charged at a constant current of 0.2 C rate at 25 °C until the battery voltage reached 4.3 V (vs. Li) and then, while maintaining 4.3 V in a constant voltage mode, the charging was cut-off at a current of 0.05 C rate. Subsequently, each battery was discharged at a constant current of 0.2 C rate until the battery voltage reached 3.6 V (vs. Li) during discharge (1^{st} cycle).

The lithium battery after the 1^{st} cycle was charged at a constant current of 0.2 C rate at 25 °C until the battery voltage reached 4.3 V (vs. Li) and then, while maintaining 4.3 V in a constant voltage mode, the charging was cut-off at a current of 0.05 C rate. Subsequently, the battery was discharged at a constant current of 0.5 C rate until the battery voltage reached 2.8 V (vs. Li) during discharge (2^{nd} cycle).

Under the same conditions as the 2^{nd} cycle, the charging and discharging were repeated up to the 7^{th} cycle.

The lithium battery after the 7^{th} cycle was charged at a constant current of 0.33 C rate at 25 °C until the battery voltage reached 4.35 V (vs. Li) and then, while maintaining 4.35 V in a constant voltage mode, the charging was cut-off at a current of 0.05 C rate. Subsequently, the lithium battery was discharged at a constant current of 1 C rate until the battery voltage reached 2.8 V (vs. Li) during discharge (8^{th} cycle).

Under the same conditions as the 8^{th} cycle, the charging and discharging were repeated up to the 14^{th} cycle.

The lithium battery after the 14^{th} cycle was charged at a constant current of 0.33 C rate at 25 °C until the battery voltage reached 4.35 V (vs. Li) and then, while maintaining 4.35 V in a constant voltage mode, the charging was cut-off at a current of 0.05 C rate. Subsequently, the lithium battery was discharged at a constant current of 2 C rate until the battery voltage reached 2.8 V (vs. Li) during discharge (15^{th} cycle).

Under the same conditions as the 15^{th} cycle, the charging and discharging were repeated up to the 18^{th} cycle.

The lithium battery after the 18^{th} cycle was charged at a constant current of 0.33 C rate at 25 °C until the battery voltage reached 4.35 V (vs. Li) and then, while maintaining 4.35 V in a constant voltage mode, the charging was cut-off at a current of 0.05 C rate. Subsequently, the lithium battery was discharged at a constant current of 3 C rate until the battery voltage reached 2.8 V (vs. Li) during discharge (up to 30^{th} cycle).

Throughout the charge-discharge cycles above, a rest period of 10 minutes was provided after each charge/discharge cycle.

A part of the charge-discharge test results is shown in Table 2.

High-rate capability is defined as Equation 2. High-rate Capability [%] = [Discharge capacity in 30th cycle (3 C rate) / Discharge capacity in 1st cycle at (0.2 C rate)] × 100

**Table 2**

| Item | Conditions | High-rate capability (%) |
|---|---|---|
| Example 1 | GPE (Gel polymer (DPHA/AD1700(3/1) 4 %) + LE, LE (Butyronitrile+ LiDFOB + LiBF₄) | 46.7 |
| Example 2 | GPE (Gel polymer (DPHA/DRIC(3/1) 4 %) + LE, LE (Butyronitrile+ LiDFOB + LiBF₄) | 42.1 |
| Example 3 | GPE (Gel polymer (DPHA/AD1700(1/1) 4 %) + LE, LE (Butyronitrile+ LiDFOB + LiBF₄) | 43.8 |
| Example 4 | GPE (Gel polymer (DPHA/DRIC(1/1) 4 %) + LE, LE (Butyronitrile+ LiDFOB + LiBF₄) | 41.5 |
| Example 6 | GPE (Gel polymer (TMPTMA/AD1700(3/1) 4 %) + LE, LE (Butyronitrile+ LiDFOB + LiBF₄) | 39.8 |
| Example 7 | Example 1 with protective layer | 42.2 |
| Comparative Example 1 | GPE (Gel polymer (DPHA/AD1700(3/1) 4 %) + LE (LiDFOB + LiBF₄, Butyronitrile-free), DPHA/AD1700 (3/1) 4% (Dahn base) | 32.3 |
| Comparative Example 2 | GPE (Gel polymer (DPHA) 4 %) + LE (LiDFOB + LiBF₄, Butyronitrile-free), DPHA 4 % (Dahn base) | 31.5 |
| Comparative Example 3 | GPE (Gel polymer (PEO-DMA/AD1700(3/1) 4 %) + LE, LE (Butyronitrile+ LiDFOB + LiBF₄) | 36.4 |

As can be seen in Table 2, the lithium batteries of Examples 1 to 4, and 6 and 7 each show improved rate capability in comparison to the lithium batteries of Comparative Examples 1 to 3.

Without being bound by any particular theory, it is believed that the lithium batteries of Examples 1 to 4, and 6 and 7 contained a gel polymer electrolyte in which anions interact more with the gel polymer chain, so that when Li moves between O (oxygen) in the chain, the binding energy decreases and fast movement of Li ions is possible, and through this, rate characteristics were improved. The lithium battery of Example 5, although not shown in Table 3, showed a similar rate capability as the lithium battery of Example 1.

### Evaluation Example 3: Ionic Conductivity

The lithium batteries of Examples 1 to 7 and Comparative Examples 1 and 2 were each evaluated for the ionic conductivity of gel polymer electrolyte at room temperature (25 °C) and at high temperature (45 °C), as follows.

At 25 °C, the ionic conductivity was measured by using a lithium symmetric cell and an impedance analyzer (Solartron 1260A Impedance/Gain-Phase Analyzer coupled with Solartron 1287 Electrochemcial Interface). The ionic conductivity was derived by using an AC impedance method coupled with a steady-state current method. First, from the impedance spectrum measured between 0.1 Hz and 100 kHz, the initial lithium interface resistance (Ro) was measured, and then, a small DC voltage (< 10 mV) was applied until a steady-state current (Iss) was obtained (time > 3,000 seconds). Finally, from the impedance spectrum measured between 0.1 Hz and 100 kHz, the steady-state lithium interfacial resistance (Rss) was measured.

The lithium symmetric cell had the structure of Li/electrolyte/Li with a gel polymer electrolyte film arranged between the lithium electrodes, and was sealed in a cell. Some of the measurement results are shown in Table 3.

**Table 3**

| Item | Conditions | Room-temperature ionic conductivity (mS/cm) | High-temperature ionic conductivity (mS/cm) |
|---|---|---|---|
| Example 1 | GPE (Gel polymer (DPHA/AD1700(3/1) 4 %) + LE, LE (Butyronitrile+ LiDFOB + LiBF₄) | 0.45 | 0.68 |
| Example 2 | GPE (Gel polymer (DPHA/DRIC(3/1) 4 %) + LE, LE (Butyronitrile+ LiDFOB + LiBF₄) | 0.41 | 0.59 |
| Example 3 | GPE (Gel polymer (DPHA/AD1700(1/1) 4 %) + LE, LE (Butyronitrile+ LiDFOB + LiBF₄) | 0.44 | 0.65 |
| Example 4 | GPE (Gel polymer (DPHA/DRIC(1/1) 4 %) + LE, LE (Butyronitrile+ LiDFOB + LiBF₄) | 0.40 | 0.56 |
| Example 6 | GPE (Gel polymer (TMPTMA/AD1700(3/1) 4 %) + LE, LE (Butyronitrile+ LiDFOB + LiBF₄) | 0.38 | 0.48 |
| Example 7 | Example 1 with protective layer | 0.35 | 0.44 |
| Comparative Example 1 | GPE (Gel polymer (DPHA/AD1700(3/1) 4 %)+ LE (LiDFOB + LiBF₄, Butyronitrile-free), DPHA/AD1700 (3/1) 4% (Dahn base) | 0.28 | 0.39 |
| Comparative Example 2 | GPE (Gel polymer (DPHA) 4 %)+ LE (LiDFOB + LiBF₄, Butyronitrile-free), DPHA 4 % (Dahn base) | 0.26 | 0.41 |

As shown in Table 3, the gel polymer electrolytes of Examples 1 to 4, and 6 and 7 were each found to have higher ionic conductivity at room temperature and at high temperature, compared to the gel polymer electrolytes of Comparative Examples 1 and 2. The gel polymer electrolyte of Example 5, although not shown in the table, showed ionic conductivity characteristics similar to that of Example 1.

### Evaluation Example 4: Scanning Electron Microscopy Analysis

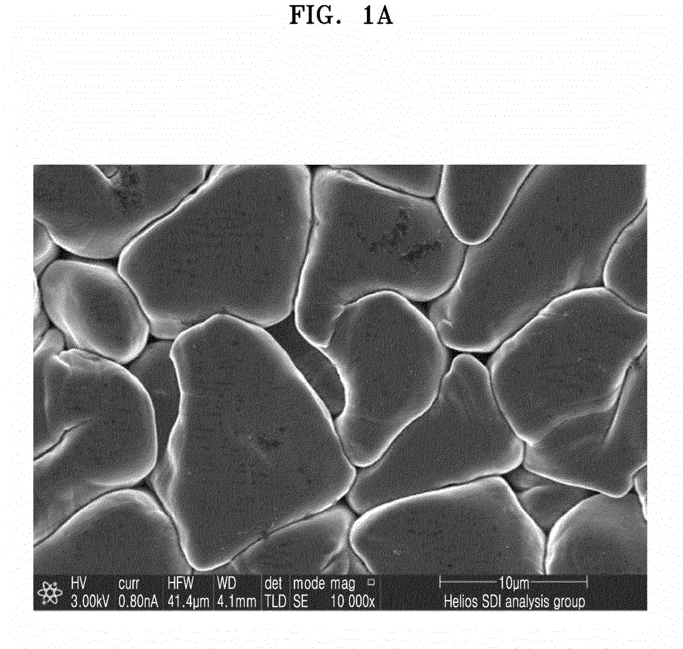

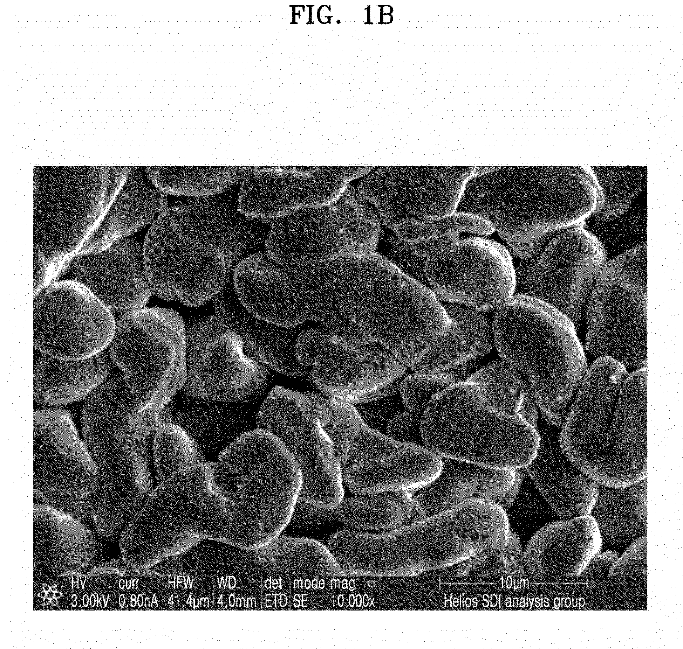

Scanning electron microscopy analysis was performed on the gel polymer electrolytes prepared according to Example 1 and Comparative Example 1. The scanning electron microscopy analysis results are shown in FIGs. 1A and 1B.

Referring to FIG. 1A, the gel polymer electrolyte of Example 1, due to containing butyronitrile, had the lithium transport occurring only along the polymer chains, and thus showed more substantially uniform lithium supply compared to the gel polymer electrolyte of Comparative Example 1 in FIG. 1B.

### Evaluation Example 5: Expansion Rate in Anode Thickness

The lithium batteries of Examples 1 to 4, and 6 and 7 and Comparative Example 1 to 4 were each evaluated for their charge-discharge characteristics under the following conditions and were also evaluated for the expansion rate in anode thickness.

The lithium battery was charged at a constant current of 0.1 C rate at 25 °C until the battery voltage reached 4.3 V (vs. Li) and then, while maintaining 4.3 V in a constant voltage mode, the charging was cut-off at a current of 0.05 C rate. Subsequently, each battery was discharged at a constant current of 0.1 C rate until the battery voltage reached 3.6 V (vs. Li) during discharge (formation cycle).

The lithium batteries after the formation cycle were each charged at a constant current of 0.2 C rate at 25 °C until the battery voltage reached 4.3 V (vs. Li) and then, while maintaining 4.3 V in a constant voltage mode, the charging was cut-off at a current of 0.05 C rate. Subsequently, each battery was discharged at a constant current of 0.5 C rate until the battery voltage reached 3.6 V (vs. Li) during discharge (1^{st} cycle). This cycle was repeated under the same conditions up to the 100^{th} cycle.

Throughout the charge-discharge cycles above, a rest period of 10 minutes was provided after each charge/discharge cycle. A part of the room-temperature expansion rate test results, calculated according to Equation 1, is shown in Table 4.Expansion Rate in Anode Thickness (%)=[Thickness of Lithium Plated Layer Formed on Anode Current Collector after 100 Cycle Charging/Thickness of Lithium Plated Layer Formed on Anode Current Collector after Formation]×100

**Table 4**

| Item | Conditions | Expansion rate in anode thickness (%) |
|---|---|---|
| Example 1 | GPE (Gel polymer (DPHA/AD1700(3/1) 4%) + LE, LE (Butyronitrile+ LiDFOB + LiBF₄) | 127.4 |
| Example 2 | GPE (Gel polymer (DPHA/DRIC(3/1) 4%) + LE, LE (Butyronitrile+ LiDFOB + LiBF₄) | 133.1 |
| Example 3 | GPE (Gel polymer (DPHA/AD1700(1/1) 4%) + LE, LE (Butyronitrile+ LiDFOB + LiBF₄) | 135.5 |
| Example 4 | GPE (Gel polymer (DPHA/DRIC(1/1) 4%) + LE, LE (Butyronitrile+ LiDFOB + LiBF₄) | 136.9 |
| Example 6 | GPE (Gel polymer (TMPTMA/AD1700(3/1) 4%) + LE, LE (Butyronitrile+ LiDFOB + LiBF₄) | 141.3 |
| Example 7 | Example 1 with protective layer | 125.5 |
| Comparat ive Example 1 | GPE (Gel polymer (DPHA/AD1700(3/1) 4%)+ LE (LiDFOB + LiBF₄, Butyronitrile-free), DPHA/AD1700 (3/1) 4% (Dahn base) | 151.3 |
| Comparat ive Example 2 | GPE (Gel polymer (DPHA) 4 %)+ LE (LiDFOB + LiBF₄, Butyronitrile-free), DPHA 4 % (Dahn base) | 159.8 |
| Comparat ive Example 3 | GPE (Gel polymer (PEO-DMA/AD1700(3/1) 4%) + LE, LE (Butyronitrile+ LiDFOB + LiBF₄) | 173.5 |

As can be seen in Table 4, unlike the lithium batteries of Comparative Examples 1 to 3, the lithium batteries of Examples 1 to 4, and 6, and 7 showed an improved expansion rate in anode thickness, of 150 % or less.

Hereinabove, one or more embodiments have been described in greater detail with reference to the accompanied drawings; however, the present disclosure is not limited to these examples. While one or more embodiments have been described with reference to the drawings, it will be understood by those of ordinary skill in the art that one or more suitable changes in form and details may be made therein without departing from the spirit and scope of the disclosure as defined by the appended claims and equivalents thereof.

According to one or more embodiments of the present disclosure, provided are a gel polymer electrolyte for a lithium battery with improved lithium-ion conductivity, and a lithium battery using the gel polymer electrolyte and having relatively high-rate capability and lifespan characteristics.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in one or more embodiments. While one or more embodiments have been described with reference to the drawings, it will be understood by those of ordinary skill in the art that one or more suitable changes in form and details may be made therein without departing from the spirit and scope of the present disclosure as defined by the appended claims and equivalents thereof.

## Claims

1. A gel polymer electrolyte, comprising
a gel polymer, and
a liquid electrolyte,
wherein the gel polymer is:
i) a crosslinked product of a polyfunctional acryl-based monomer having 3 or more polymerizable functional groups; or
ii) a crosslinked product of a first polymerizable monomer and a second polymerizable monomer, the first polymerizable monomer being a polyfunctional acryl-based monomer having 3 or more polymerizable functional groups, and the second polymerizable monomer being one or more selected from among a urethane acryl-based monomer having two or more polymerizable functional groups, a polymerizable monomer having two or more polymerizable functional groups and containing a perfluoropolyether (PFPE) unit, and a combination thereof,
wherein the liquid electrolyte comprises a lithium salt, an organic solvent, and butyronitrile,
wherein the lithium salt comprises a first lithium salt and a second lithium salt, the first lithium salt and the second lithium salt each independently comprising a fluorine-containing borate-based lithium salt, and
wherein the gel polymer electrolyte is for a lithium battery and whereby preferably the gel polymer electrolyte has an ionic conductivity of about 0.3 mS/cm or more at 25 °C and 1 atm, and an ionic conductivity of about 0.42 mS/cm or more at 45 °C and 1 atm.

2. The gel polymer electrolyte as claimed in claim 1, wherein an amount of the butyronitrile is about 5 wt% to about 15 wt% with respect to a total weight of 100 wt% of the liquid electrolyte.

3. The gel polymer electrolyte as claimed in claim 1 or 2, wherein the polyfunctional acryl-based monomer having 3 or more polymerizable functional groups is trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate (DPHA), or a combination thereof.

4. The gel polymer electrolyte as claimed in any of the claims 1 to 3,
wherein the urethane acryl-based monomer having two or more functional groups is a compound represented by Formula 1, a compound represented by Formula 2, or a combination thereof, and
wherein the polymerizable monomer having two or more polymerizable functional groups and containing a PFPE unit is a compound represented by Formula 3, a compound represented by Formula 3-1, or a combination thereof: 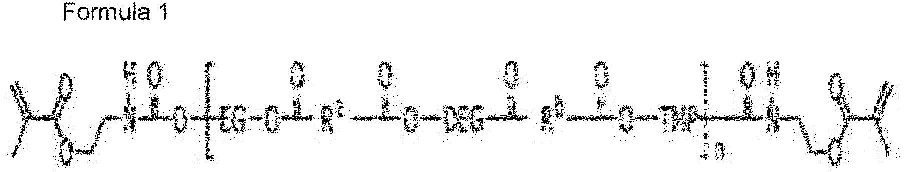
in Formula 1, n being an integer of 1 to 100, R^{a} and R^{b} being the same as or different from each other, and being each independently a substituted or unsubstituted C1-C10 alkylene group, EG denoting an ethylene glycol residue, DEG denoting a diethylene glycol residue, and TMP denoting a trimethylolpropane residue, 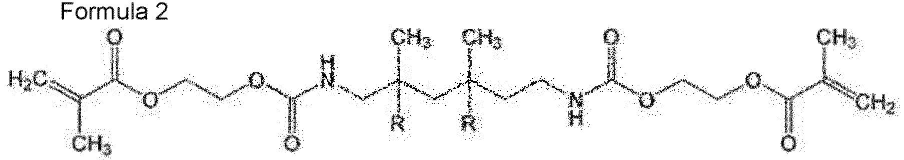
in Formula 2, each R being independently hydrogen or a C1-C3 alkyl group, 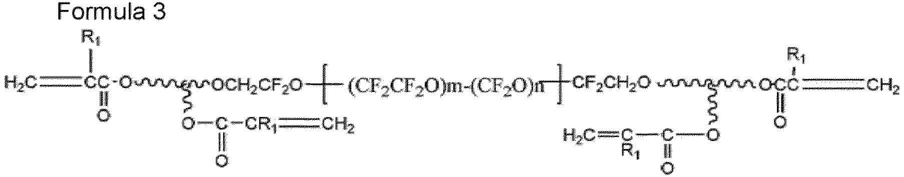
in Formula 3, R₁ being hydrogen or a C1-C6 alkyl group, m and n each independently being an integer greater than 0, the sum of m and n being in a range of 2 to about 300, m being an integer in a range of 1 to about 150, and n being an integer in a range of 1 to about 150, and 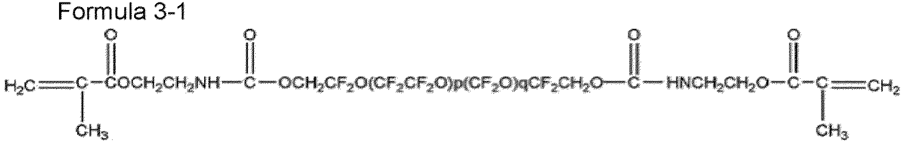
in Formula 3-1, p and q each independently being an integer greater than 0, the sum of p and q being in a range of 2 to about 300, p being an integer in a range of 1 to about 150, and q being an integer in a range of 1 to about 150.

5. The gel polymer electrolyte as claimed in any of the claims 1 to 4,
wherein an amount of the liquid electrolyte is about 90 parts by weight to about 96 parts by weight with respect to 100 parts by weight of a total weight of the gel polymer electrolyte, and
wherein an amount of the gel polymer is about 4 parts by weight to about 10 parts by weight with respect to 100 parts by weight of the total weight of the gel polymer electrolyte.

6. The gel polymer electrolyte as claimed in any of the claims 1 to 5,
wherein the fluorine-containing borate-based lithium salt comprises LiBF₄, LiBF₃(C₂F₅), a compound represented by any one selected from among Formulas 5 to 16, or a combination thereof.

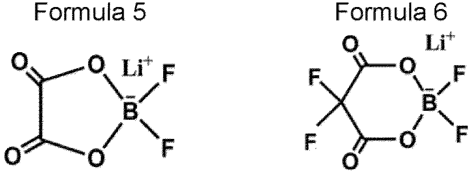

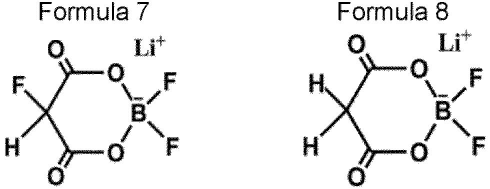

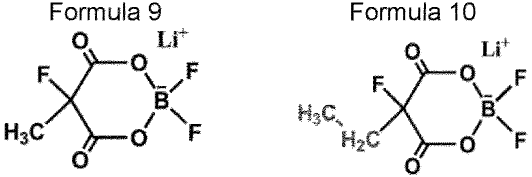

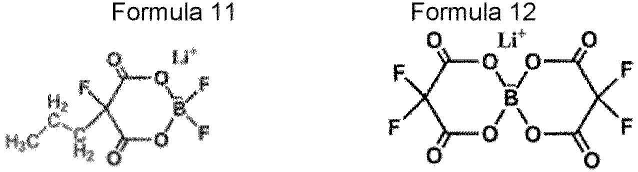

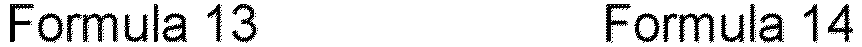

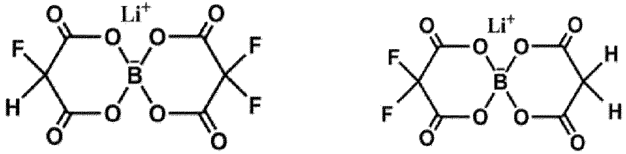

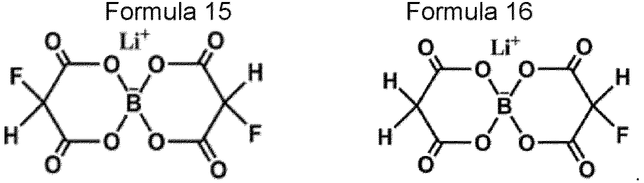

7. The gel polymer electrolyte as claimed in any of the claims 1 to 6,
wherein the first lithium salt comprises LiBF₄, the second lithium salt comprises a compound selected from among compounds represented by Formulas 5 to 16, and a concentration of the lithium salt is about 0.1 M to about 5 M.

8. The gel polymer electrolyte as claimed in any of the claims 1 to 7,
wherein the lithium salt comprises lithium difluoro(oxalato)borate (LiDFOB) and lithium tetrafluoroborate (LiBF₄), and
wherein a mixing weight ratio of the LiDFOB to the lithium tetrafluoroborate (LiBF₄) is about 1:2 to about 1:0.3.

9. The gel polymer electrolyte as claimed in any of the claims 1 to 8,
wherein the organic solvent comprises a carbonate-based compound,
wherein the carbonate-based compound comprises fluoroethylene carbonate (FEC) and diethyl carbonate (DEC),
wherein a mixing weight ratio of the FEC to the DEC is about 1:10 to about 1:1, and
wherein an amount of the FEC is about 5 wt% to about 45 wt% with respect to a total weight of the liquid electrolyte.

10. A lithium battery comprising:
a cathode;
an anode current collector; and
an electrolyte layer between the cathode and the anode current collector,
wherein the electrolyte layer comprises the gel polymer electrolyte as claimed in any of the claims 1 to 9.

11. The lithium battery as claimed in claim 10, further comprising a lithium metal layer between the anode current collector and the electrolyte layer, whereby preferably the lithium metal layer comprises a lithium metal foil, lithium metal powder, a lithium alloy foil, lithium alloy powder, or a combination thereof, whereby preferably wherein a lithium alloy in each of the lithium alloy foil and the lithium alloy powder contains lithium and a first metal, and
wherein the first metal is indium, silicon, gallium, tin, aluminum, zirconium, niobium, germanium, antimony, bismuth, gold, platinum, palladium, magnesium, silver, zinc, chromium, cesium, sodium, potassium, calcium, yttrium, bismuth, tantalum, hafnium, barium, vanadium, strontium, lanthanum, or a combination thereof.

12. The lithium battery as claimed in claim 10 or 11, wherein the electrolyte layer comprises a separator, and
wherein the separator comprises a porous substrate, whereby preferably the porous substrate is a porous film,
wherein the porous film is a woven fabric or a non-woven fabric,
wherein the porous substrate comprises an olefin-based resin, a fluorine-based resin, an ester-based resin, an imide-based resin, an acryl-based resin, a cellulose-based resin, or a combination thereof,
wherein the olefin-based resin comprises polyethylene, polypropylene, or a combination thereof,
wherein the fluorine-based resin comprises polyvinylidene fluoride, polytetrafluoroethylene, or a combination thereof,
wherein the ester-based resin comprises polyethylene terephthalate, polybutylene terephthalate, or a combination thereof,
wherein the imide-based resin comprises polyamide-imide, polyetherimide, or a combination thereof,
wherein the acryl-based resin comprises polyacrylonitrile, polyacrylate, or a combination thereof, and
wherein the cellulose-based resin comprises carboxymethylcellulose, microbial or bacterial cellulose, plant-based cellulose, animal-based cellulose, or a combination thereof.

13. The lithium battery as claimed in any of the claims 10 to 12, wherein the anode current collector comprises copper, nickel, nickel-coated copper, stainless steel, iron, cobalt, or an alloy thereof.

14. The lithium battery as claimed in any of the claims 10 to 13, further comprising, between the anode current collector and the electrolyte layer, an anode active material layer, a protective layer, or a combination thereof, whereby preferably the protective layer comprises a crosslinked polymer of a first polymer and a second polymer,
wherein the second polymer comprises one or more selected from among a fluorine-containing polyamic acid having a carboxyl group and a fluorine-containing polyimide having a carboxyl group, and
wherein the fluorine-containing polyamic acid is a polymer represented by Formula 17 or Formula 18, and the fluorine-containing polyimide is a polymer represented by Formula 19 or Formula 20: 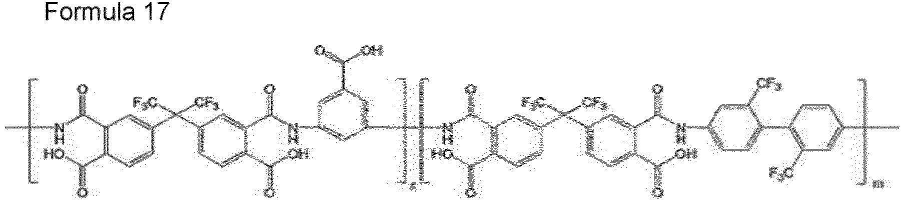 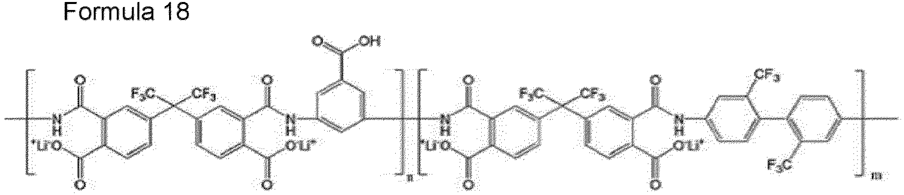 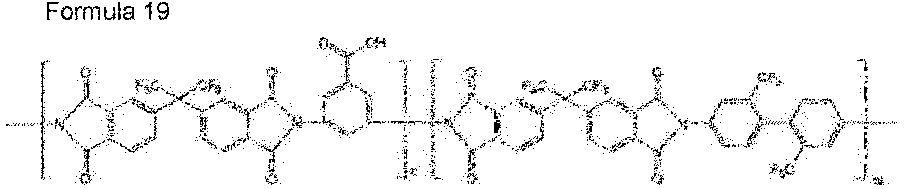 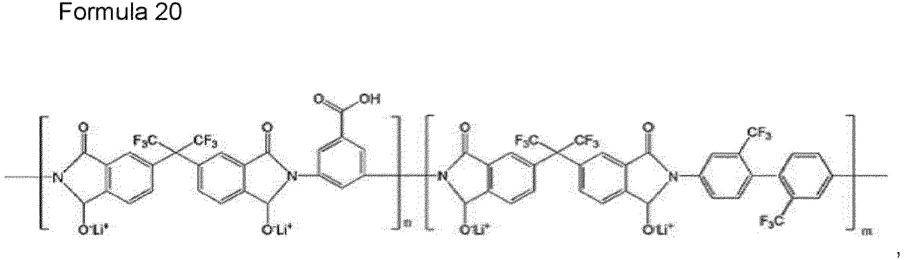
in Formulas 17 to 20, n and m each being a mole fraction of a corresponding repeating unit, wherein 0<n≤1, 0≤m<1, and n+m=1.

15. The lithium battery as claimed in any of the claims 10 to 14, wherein the cathode comprises a cathode current collector and a cathode active material layer,
wherein at least one of the cathode current collector or the anode current collector comprises a base film and a metal layer on a side of the base film,
wherein the base film comprises a polymer,
wherein the polymer comprises polyethylene terephthalate, polyethylene, polypropylene, polybutylene terephthalate, polyimide, or a combination thereof, and
wherein the metal layer comprises indium, copper, magnesium, stainless steel, titanium, iron, cobalt, nickel, zinc, aluminum, germanium, lithium, or an alloy thereof.
